(19) Europäisches Patentamt European Patent Office Office européen des brevets

(11) **EP 4 492 019 A1**

(12) **EUROPEAN PATENT APPLICATION**
published in accordance with Art. 153(4) EPC

(43) Date of publication:
**15.01.2025 Bulletin 2025/03**

(21) Application number: **23766802.5**

(22) Date of filing: **06.03.2023**

(51) International Patent Classification (IPC):
***G01J 3/45*** (2006.01)     ***G01J 3/02*** (2006.01)

(52) Cooperative Patent Classification (CPC):
**G01J 3/02; G01J 3/45**

(86) International application number:
**PCT/JP2023/008375**

(87) International publication number:
**WO 2023/171626 (14.09.2023 Gazette 2023/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.03.2022 JP 2022035693**

(71) Applicant: **SHIMADZU CORPORATION**
**Kyoto-shi, Kyoto 604-8511 (JP)**

(72) Inventors:
• **HISAMITSU, Mamoru**
**Kyoto-shi, Kyoto 604-8511 (JP)**
• **WAKABAYASHI, Naoki**
**Kyoto-shi, Kyoto 604-8511 (JP)**
• **TOKUDA, Katsuhiko**
**Kyoto-shi, Kyoto 604-8511 (JP)**

(74) Representative: **Müller-Boré & Partner**
**Patentanwälte PartG mbB**
**Friedenheimer Brücke 21**
**80639 München (DE)**

(54) **SPECTROSCOPIC DEVICE**

(57) A decrease in accuracy caused by influence of noise light is suppressed.

A spectroscopic device (1) includes a light source (2), a quantum optical system (4), a detection unit (6) that detects a light intensity of light output from the quantum optical system (4), and an analysis device (8), the quantum optical system (4) including one or more nonlinear optical elements (12) that generates a photon pair of idler light and signal light from the pump light in an entangled photon pair generation process, and a sample placement tool (35) that places a sample (SP) on an optical path of the idler light. The quantum optical system (4) is configured to emit first and second signal lights (s1, s2) along different optical paths, the detection unit (6) includes a beam splitter (40) that receives the first and second signal lights (s1, s2) from the quantum optical system (4), and detects a light intensity of each of two lights emitted from the beam splitter (40), and the analysis device (8) acquires an interferogram from the two lights detected by the detection unit (6).

FIG.1

**EP 4 492 019 A1**

**Description**

Technical Field

The present invention relates to a spectroscopic device.

Background Art

In infrared spectroscopic analysis, there has been proposed a technique that eliminates the need for detecting infrared rays and enables spectroscopic analysis by detecting only visible light by using a pair of quantum-mechanically correlated photons (see, for example, Non Patent Literature 1, Non Patent Literature 2, and Non Patent Literature 3).

Citation List

Non Patent Literature

Non Patent Literature 1: Anna Paterova, Hongzhi Yang, Chengwu An, Dmitry Kalashnikov and Leonid Krivitsky, "Measurement of infrared optical constants with visible photons", New Journal of Physics, April 2018, Volume 20 043015
Non Patent Literature 2: Chiara Lindner, Sebastian Wolf, Jens Kiessling, and Drank kuhnemann, "Fourier transform infrared spectroscopy with visible light", Optics Express, Vol. 28, Issue 4, pp. 4426-4432 (2020)
Non Patent Literature 3: Y. Mukai, M. Arahata, T. Tashima, R. Okamoto, and S. Takeuchi, "Quantum Fourier-Transform Infrared Spectroscopy for Complex Transmittance Measurements", PHYSICAL REVIEW APPLIED, Vol. 15, Issue 3, March 2021

Summary of Invention

Technical Problem

However, there is a problem that, in a case where noise light such as stray light, ambient light, or fluorescence from optical elements occurs in an optical system that generates a photon pair or the like, the accuracy of spectral analysis deteriorates due to the influence of the noise light.
An object of the present invention is to provide a spectroscopic device capable of suppressing a decrease in accuracy caused by influence of noise light.

Solution to Problem

The entire contents of Japanese Patent Application No. 2022-035693 filed on March 8, 2022 are incorporated herein.
According to one aspect of the present invention, a spectroscopic device includes: a light source that emits pump light; a quantum optical system including one or more nonlinear optical elements on which the pump light is incident to generate a photon pair of idler light and signal light from the pump light in an entangled photon pair generation process, and a sample placement tool that places a sample on an optical path of the idler light; a detection unit that detects a light intensity of light output from the quantum optical system; and an analysis device that acquires an interferogram based on the light intensity, in which the quantum optical system is configured to emit first and second signal lights along different optical paths, the detection unit includes a beam splitter that receives the first and second signal lights from the quantum optical system, and detects a light intensity of each of two lights emitted from the beam splitter, and the analysis device acquires the interferogram from the two lights detected by the detection unit.

Advantageous Effects of Invention

According to one aspect of the present invention, it is possible to suppress a decrease in accuracy caused by influence of noise light.

Brief Description of Drawings

Fig. 1 is a diagram schematically illustrating a configuration of an infrared spectroscopic device according to an embodiment of the present invention.
Fig. 2 is a schematic diagram of an interferogram obtained by the infrared spectroscopic device of the present embodiment.
Fig. 3 is a diagram for explaining synthesis of signal lights s1 and s2 in a beam splitter.
Fig. 4 is a diagram schematically illustrating a configuration of a reference configuration.
Fig. 5 is a schematic diagram of an interferogram obtained by the reference configuration.
Fig. 6 is a diagram schematically illustrating a configuration of an infrared spectroscopic device according to a first modification.
Fig. 7 is a diagram schematically illustrating a configuration of an infrared spectroscopic device according to a second modification.
Fig. 8 is a diagram schematically illustrating a configuration of an infrared spectroscopic device according to a third modification.
Fig. 9 is a diagram schematically illustrating a configuration of an infrared spectroscopic device according to a fourth modification.
Fig. 10 is a diagram schematically illustrating a configuration of an infrared spectroscopic device according to a second embodiment.
Fig. 11 is a diagram schematically illustrating a configuration of an infrared spectroscopic device according to a third embodiment.

Description of Embodiments

Hereinafter, embodiments of the present invention will be described with reference to the drawings.

[First Embodiment]

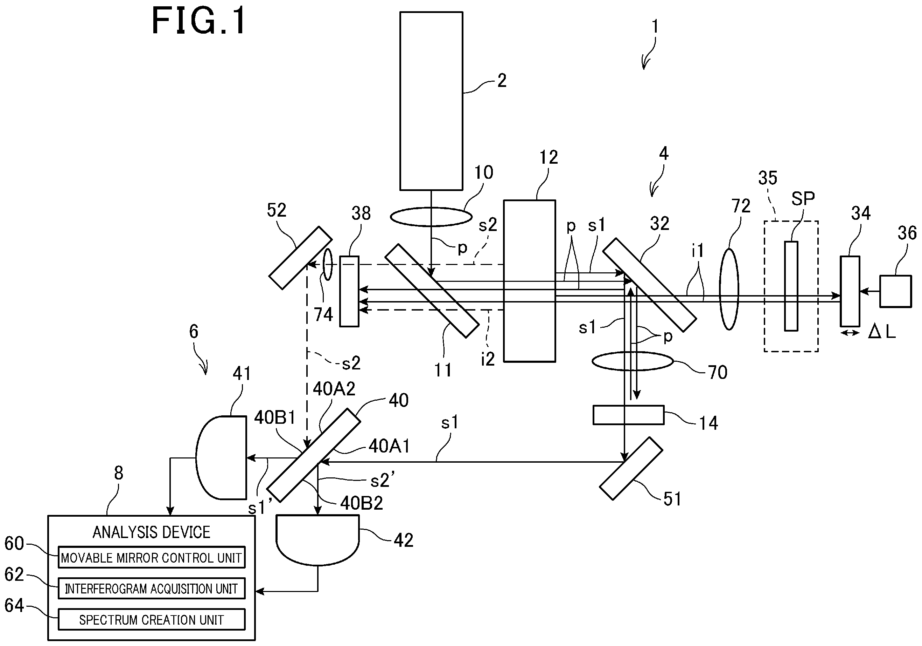

Fig. 1 is a diagram schematically illustrating a configuration of an infrared spectroscopic device 1 according to a first embodiment. Note that, in Fig. 1, optical paths overlapping each other are depicted separately for convenience of explanation.

The infrared spectroscopic device 1 of the present embodiment is a measurement device using infrared spectroscopy. The infrared spectroscopy is an analytical technique for performing structural analysis and quantification on a sample SP based on an absorption spectrum obtained by irradiating the sample SP with infrared rays. Measurement devices using infrared spectroscopy are classified into dispersion type devices and Fourier transform type devices. The infrared spectroscopic device 1 of the present embodiment is a Fourier transform type device, and spectroscopically analyzes the sample SP by performing Fourier transform analysis on an interferogram obtained by interference of light.

In the infrared spectroscopic device 1 of the present embodiment, the interferogram can be acquired by detecting signal photons in the visible range, using idler photons in the infrared range and idler photons among the signal photons in the visible range, which are a pair of quantum-mechanically correlated photons, as light with which the sample SP is irradiated, and using quantum interference between the pair of quantum-mechanically correlated photons.

The "pair of quantum-mechanically correlated photons" is called an "entangled photon pair", and will be referred to as an "entangled photon pair" in the present specification.

In addition, even if the signal photons contain noise light such as ambient light, stray light, or fluorescence from optical elements, the infrared spectroscopic device 1 of the present embodiment can acquire an interferogram from which the influence of the noise light has been eliminated, enabling highly accurate spectroscopic analysis.

As illustrated in Fig. 1, the infrared spectroscopic device 1 includes a light source 2, a quantum optical system 4, a detection unit 6, and an analysis device 8.

The light source 2 is a laser device that causes continuous-wave laser light having a wavelength in the visible range to be incident on the quantum optical system 4. This laser light is used as pump light p for exciting a nonlinear crystal 12 to be described later in the quantum optical system 4, and light having a wavelength of 532 nm is used in the present embodiment.

The quantum optical system 4 is an optical system having at least an entangled photon pair generation function, a quantum interference function, a sample action function, an optical path length change function, and a signal light separation-output function.

[Entangled Photon Pair Generation Function]

The entangled photon pair generation function is a function of generating an entangled photon pair of idler photons having a wavelength in the infrared range and signal photons having a wavelength in the visible range by an entangled photon pair generation process. In the present embodiment, the wavelength of the idler photons is 1.5 um and the wavelength of the signal photons is 0.824 um. In addition, both the idler photons and the signal photons are continuous waves, and hereinafter, the continuous-wave idler photons will be referred to as "idler light i", and the continuous-wave signal photons will be referred to as "signal light s".

In the entangled photon pair generation process, spontaneous parametric down-conversion (SPDC), which is one of the nonlinear optical processes, is used. That is, as illustrated in Fig. 1, the quantum optical system 4 includes a nonlinear crystal 12, which is an example of a nonlinear optical element that causes spontaneous parametric down-conversion by the pump light p incident thereon. The nonlinear crystal 12 converts the pump light p incident thereon through a condensing lens 10 and a first dichroic mirror 11 into an entangled photon pair (idler light i and signal light s) by spontaneous parametric down-conversion, and outputs the entangled photon pair. The phase matching condition of the nonlinear crystal 12 is appropriately adjusted to obtain the signal light s having a wavelength of 1 um or less and the idler light i that is infrared light from the pump light p that is visible light. In the present embodiment, as described above, the wavelength of the signal light s is 0.824 um, and the wavelength of the idler light i is 1.5 um.

The condensing lens 10 is a lens focused on the nonlinear crystal 12 to condense the pump light p onto the nonlinear crystal 12. The first dichroic mirror 11 transmits the signal light s and reflects the pump light p.

A lithium niobate ($LiNbO_3$) crystal is used as the nonlinear crystal 12, or another nonlinear crystal such as a gallium silver sulfide ($AgGaS_2$) crystal can also be used.

In addition, as the nonlinear optical element, a pseudo-phase matching element with periodically inverted polarization, a silicon resonator, an optical waveguide formed from silicon (Si) and/or silicon nitride (SiN), or the like can be used instead of the nonlinear crystal 12.

[Quantum Interference Function]

The quantum interference function is a function of generating quantum interference between multiple entangled photon pair generation processes. In the quantum optical system 4 of the present embodiment, the number of times the entangled photon pair generation process can occur is two. Hereinafter, the first-time entangled photon pair generation process will be referred to as a "first entangled photon pair generation process", and the second-time entangled photon pair generation process will be referred to as a "second entangled photon pair generation process". In addition, idler light i and signal light s generated in the first entangled photon pair generation process will be denoted by reference signs "i1" and "s1", respectively, and idler light i and signal light s generated in the second entangled photon pair generation process will be denoted by reference signs "12" and "s2", respectively. The reference sign "11" may be referred to as first idler light i1, the reference sign "12" may be referred to as second idler light i2, the reference sign "s1" may be referred to as first signal light s1, and the reference sign "s2" may be referred to as second signal light s2.

Here, in quantum optics, both the first entangled photon pair generation process and the second entangled photon pair generation process are described based on probability amplitudes. In the quantum interference, when the probability amplitudes of the first entangled photon pair generation process and the second entangled photon pair generation process interfere with each other in a same-phase state, the probability amplitudes are strengthened (so-called "constructive interference"). Conversely, when the probability amplitudes of the first entangled photon pair generation process and the second entangled photon pair generation process interfere with each other in an anti-phase state, the probability amplitudes are canceled (so-called "destructive interference").

According to quantum optics, when the "constructive interference" or the "destructive interference" occur, the probability that photons constituting an entangled photon pair are detected increases or decreases. On the other hand, when such quantum interference does not occur (such quantum interference does not occur if a state vector corresponding to a first photon generation process and a state vector corresponding to a second photon generation process are independent of and distinguishable from each other), the above-described increase or decrease in detection probability does not occur.

The quantum optical system 4 of the present embodiment is configured to generate quantum interference between the first entangled photon generation process and the second entangled photon generation process.

More specifically, as illustrated in Fig. 1, the quantum optical system 4 includes a fixed mirror 14 that reflects the pump light p emitted from the nonlinear crystal 12. The fixed mirror 14 reflects the pump light p incident thereon so that the pump light p reaches the nonlinear crystal 12 along the same optical path to be incident on the nonlinear crystal 12 again. As a result, the pump light p passes through the nonlinear crystal 12 twice in opposite directions (that is, travels back and forth), causing a first entangled photon pair generation process on a forward path and a second entangled photon pair generation process on a backward path.

That is, in the present embodiment, there is one nonlinear crystal 12, and the quantum optical system 4 emits the first signal light s1 and the second signal light s2 on the optical path of the pump light p that travels back and forth through the single nonlinear crystal 12.

In the present embodiment, the efficiency of the spontaneous parametric down-conversion in the nonlinear crystal 12 is low, and only a very small part of the pump light p is converted into an entangled photon pair. Therefore, the amount of the pump light p traveling back and forth through the nonlinear crystal 12 is substantially the same between the forward path and the backward path that are the same optical path, and the light amount of the entangled photon pair generated is also substantially the same between the first entangled photon pair generation process and the second entangled photon pair generation process. When the sample SP is not placed, quantum interference occurs between these two photon pair generation processes.

Note that a collimator lens 70 that collimates the pump light p and the signal light s1 is arranged in front of the fixed mirror 14.

[Sample Action Function]

The sample action function is a function of causing absorption or reflection (absorption in the present embodiment) by a sample SP to be analyzed by causing the idler light i1 isolated from the entangled photon pair generated in the first entangled photon pair generation process to pass through the sample SP. The action of the sample SP absorbing or reflecting the idler light i1 weaken the intensity of the quantum interference than that when no sample SP is placed. The weakening of the intensity is reflected in the probabilities that the signal lights s1 and s2 are detected.

In the present embodiment, in order to realize the sample action function, the quantum optical system 4 includes a second dichroic mirror 32, a movable mirror 34, and a sample placement tool 35, and the sample placement tool 35 and a collimator lens 72 are arranged between the second dichroic mirror 32 and the movable mirror 34. The sample placement tool 35 is a tool that holds the sample SP, and includes, for example, a sample holder such as a sample case or a sample stage transparent to the idler light i, and the sample holder holds the sample SP on the optical path of the idler light i1.

The second dichroic mirror 32 is an optical member that isolates the idler light i1 from the light (the pump light p, the signal light s1, and the idler light i1) emitted from the nonlinear crystal 12.

The movable mirror 34 is a reflecting mirror that reflects the idler light i1 isolated by the second dichroic mirror 32 and incident thereon back to the second dichroic mirror 32 along the same optical path as when the idler light i1 is incident thereon.

The collimator lens 72 collimates the idler light i1.

By placing the sample SP is disposed on the optical path between the second dichroic mirror 32 and the movable mirror 34, the sample SP acts on the idler light i1 traveling back and forth between the second dichroic mirror 32 and the movable mirror 34, weakening the intensity of quantum interference, and the weakening of intensity is reflected in the probabilities that the signal light s1 and s2 are detected. Since the signal light s1 is in an entangled state with the idler light i1 on which the sample SP acts, and the signal light s2 is in an entangled state with the idler light i2 on which the sample SP does not act, the sample SP can be spectroscopically analyzed based on the signal light s1 and the signal light s2.

Note that, by providing a sealed sample chamber for containing a sample SP on the optical path and providing the sample placement tool 35 in the sample chamber, the sample SP can be spectroscopically analyzed in a state where the atmospheric pressure inside the sample chamber is adjusted.

[Optical Path Length Change Function]

The optical path length change function is a function of changing the length of the optical path from the second dichroic mirror 32 to the movable mirror 34. In order to realize this function, the quantum optical system 4 includes an actuator 36 that changes the optical path length by moving the movable mirror 34 at a constant speed in a direction coaxial with the optical path.

[Signal Light Separation-Output Function]

The signal light separation-output function is a function of outputting the signal light s1 and the signal light s2 that can be observed by the sample action function from different optical paths.

In order to realize this function, the quantum optical system 4 includes a band pass filter 38 and the fixed mirror 14. Both the band pass filter 38 and the fixed mirror 14 are optical members having optical characteristics for transmitting light having a target wavelength, the fixed mirror 14 is used as a first output member that outputs the signal light s1, and the band pass filter 38 is used as a second output member that outputs the signal light s2.

More specifically, the band pass filter 38 is an optical filter that transmits the signal light s2 among the lights (pump light p and entangled photon pair (signal light s2 and idler light i2) generated in the second entangled photon pair generation process) having passed through the second dichroic mirror 32 from the nonlinear crystal 12 side, and shields the other light (pump light p and idler light i2). As a result, the signal light s2 is output from the quantum optical system 4 through the band pass filter 38. A collimator lens 74 is disposed on the output side of the band pass filter 38, and the signal light s2 is output after being collimated by the collimator lens 74.

The fixed mirror 14 is a reflecting mirror having optical characteristics for reflecting the pump light p and transmitting the signal light s1. Therefore, the signal light s1 incident on the fixed mirror 14 from the second dichroic mirror 32 among the lights (pump light p and signal light s1) is output from the quantum optical system 4 through the fixed mirror 14. Similarly to the signal light s2, the signal light s1 is collimated by the collimator lens 70.

Note that Non Patent Literature 1 to Non Patent Literature 3 disclose a configuration in which the signal light s1 is incident again on the nonlinear crystal 12 along the same path in a state where the signal light s1 overlaps the pump light p, thereby outputting the signal light s1 and the signal light s2 in an overlapping state. However, even in a case where the signal light s1 is not incident on the nonlinear crystal 12 again because the signal light s1 is transmitted through the fixed mirror 14 as in the present embodiment, quantum interference occurs when the two signal lights s1 and s2 are synthesized by a beam splitter 40 to be described later (see, e.g., X. Y. Zou, L. J. Wang, L. Mandel, "Induced coherence and indistinguishability in optical interference", Physical Review Letters, Volume 67, Issue 3, July 15, 1991, pp. 318-321.).

Here, in the quantum optical system 4 of the present embodiment, the second dichroic mirror 32, the fixed mirror 14, and the movable mirror 34 have a configuration similar to that of the Michelson interferometer. However, such a configuration can be replaced with a configuration similar to that of another interferometer such as a Mach-Zehnder interferometer as long as an optical path difference is generated between the optical path between the second dichroic mirror 32 and the fixed mirror 14 and the optical path between the second dichroic mirror 32 and the movable mirror 34.

The detection unit 6 causes the signal lights s1 and s2 output from the quantum optical system 4 to interfere by synthesis and detects light after the synthesis, and includes a beam splitter 40, a first detector 41, and a second detector 42.

The beam splitter 40 is an optical element that causes interference by synthesizing the signal lights s1 and s2, and includes two incidence ports 40A1 and 40A2 and two emission ports 40B1 and 40B2. Then, the signal lights s1 and s2 are incident on the beam splitter 40 from the different incidence ports 40A1 and 40A2, respectively. Specifically, the signal light s1 is guided from the quantum optical system 4 by the reflecting mirror 51 and enters the incidence port 40A1, and the signal light s2 is guided from the quantum optical system 4 by the reflecting mirror 52 and enters the other incidence port 40A2. The signal lights s1 and s2 are synthesized inside the beam splitter 40, and the synthesized light is split into and output to the two emission ports 40B1 and 40B2.

As described above, the signal light s1 is in an entangled state with the idler light i1 on which the sample SP acts, and the signal light s2 is in an entangled state with the idler light i2 on which the sample SP does not act. Therefore, the light output from each of the emission ports 40B1 and 40B2 is light in which the signal light s1 containing information on the action with the sample SP and the signal light s2 not containing information on the action with the sample SP interfere with each other.

In the present embodiment, the beam splitter 40 has a ratio of reflectance to transmittance of 1:1, and the amounts of light output from the two emission ports 40B1 and B2 are approximately equal. However, the ratio of reflectance to transmittance of beam splitter 40 is not limited to 1:1.

In the following description, lights output from the two emission ports 40B1 and 40B2 will be referred to as signal light s1' and signal light s2', respectively. However, as described above, both the signal light s1' and the signal light s2' are light after the signal lights s1 and s2 interfere with each other, the signal light s1' is not derived only from the signal light s1, and the signal light s2' is not derived only from the signal light s2.

The first detector 41 is a photodetector that detects the signal light s1' and outputs a first detection signal to the analysis device 8, and the second detector 42 is a photodetector that detects the signal light s2' and outputs a second detection signal to the analysis device 8. For each of the first detector 41 and the second detector 42, a silicon-based photodetector having optical characteristics capable of detecting visible light is used, and for example, an image sensor including a solid-state semiconductor element such as a charged-coupled device (CCD) or a complementary metal-oxide-semiconductor (CMOS) is used. Furthermore, a single photodiode (PD) can be used instead of the image sensor. The first detection signal and the second detection signal are signals indicating intensities (that is, light intensities) according to (more precisely, directly proportional to) the number of photons detected from the signal lights s1' and s2'.

The analysis device 8 acquires an interferogram based on a difference between the first detection signal of the first detector 41 and the second detection signal of the second detector 42 while the movable mirror 34 is moved at a constant speed, and performs Fourier transform analysis on the interferogram to spectrally analyze the sample SP. The analysis device 8 of the present embodiment includes a computer that realizes the above-described functions. The computer includes a processor such as a central processing unit (CPU) or a micro-processing unit (MPU), a memory device (also referred to as a main storage device) such as a read only memory (ROM) or a random access memory (RAM), a storage device (also referred to as a sub-storage device) such as a hard disk drive (HDD) or a solid state drive (SSD), and an interface circuit for connecting the light source 2, the quantum optical system 4, and the detection unit 6 to be able to transmit and receive signals. The processor executes a program stored in the memory device or the storage device, thereby realizing each functional unit illustrated in Fig. 1.

That is, as illustrated in Fig. 1, the analysis device 8 includes a movable mirror control unit 60, an interferogram acquisition unit 62, and a spectrum creation unit 64.

The movable mirror control unit 60 transmits a control signal for moving the movable mirror 34 to the actuator 36 and controls a movement of the movable mirror 34.

The interferogram acquisition unit 62 acquires an interferogram by calculating a difference between the first detection signal of the first detector 41 and the second detection signal of the second detector 42 while the movable mirror 34 is moved at a constant speed.

The spectrum creation unit 64 creates a wavelength or wavenumber spectrum by performing Fourier transform (e.g., fast Fourier transform) on the interferogram. Based on a peak wavenumber (wavelength), a peak intensity, or the like of the spectrum, qualitative analysis and quantitative analysis are performed on the sample SP.

Note that the analysis device 8 is not limited to the above-described functions, and may control each unit of the infrared spectroscopic device 1, such as turning on and off the light source 2.

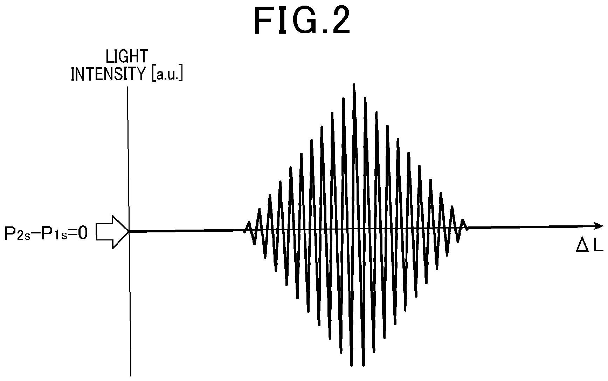

Fig. 2 is a schematic diagram of an interferogram acquired by the analysis device 8.

The interferogram is a signal indicating a relationship between light (signal lights s1' and s2') obtained by synthesizing the signal lights s1 and s2 and a movement amount $\Delta L$ (i.e., an amount of change in optical path length for the idler light i) of the movable mirror 34. In the present embodiment, the light obtained by synthesizing the signal lights s1 and s2 is evenly distributed to two signal lights s1' and s2' from the beam splitter 40. Then, the interferogram acquisition unit 62 of the analysis device 8 acquires a difference (P2s-P1s) between light intensities P1s and P2s of the signal lights s1' and s2' as an interferogram.

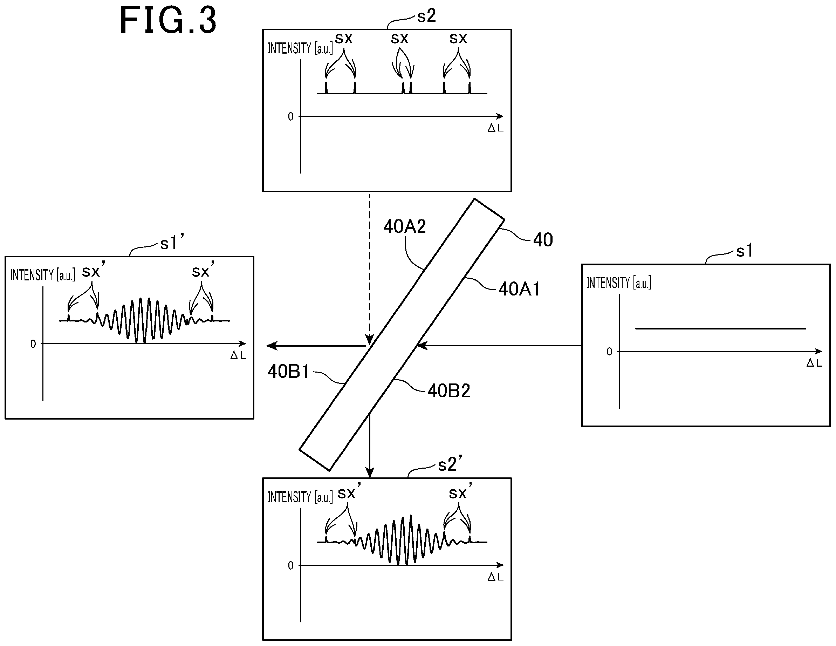

Fig. 3 is a diagram for explaining the synthesis of the signal lights s1 and s2 in the beam splitter 40.

In the infrared spectroscopic device 1, as illustrated in Fig. 3, for example, it is assumed that noise (stray light, fluorescence, or the like) is mixed in the path of the signal light s2, causing the signal light s2 to contain a noise component sx (stray light, fluorescence, or the like) In this case, when the signal light s2 is incident on the beam splitter 40, the noise component sx is evenly distributed to the paths of the signal light s1' and the signal light s2'. As a result, the signal light s1' and the signal light s2' containing the noise component sx' having a height of 1/2 of the noise component sx are output from the beam splitter 40. Here, since the signal lights s1 and s2 derived from the crystal cause quantum interference, the intensities of the signals s1' and s2' oscillate in opposite phases. Therefore, when the difference (P2s-P1s) between the light intensities P1s and P2s of the signal lights s1' and s2' is taken, the noise components sx' of the signal lights s1' and s2' disappear, and only an interference signal remains as illustrated in Fig. 2. Note that, by taking the difference (P2s-P1s) between the light intensities P1s and P2s, the waveform of the interferogram becomes a waveform based on the axis of the difference (P2s-P1s)=0 (zero), that is, a waveform with an offset of "zero", as illustrated in Fig. 2.

In this manner, in the infrared spectroscopic device 1, even if noise light is generated during a period up to the stage before the detection unit 6 and the noise light is mixed in the signal lights s1 and s2, the influence of the noise light is canceled by the difference between the signal lights s1' and s2', and an interferogram in which the influence of the noise light is removed is obtained. In particular, in a case where the conversion efficiency of the nonlinear crystal 12 is poor and the light intensities of the signal light s1, s2, s1', and s2' is weak, the accuracy of the analysis result greatly decreases even under the influence of slight noise light. On the other hand, according to the infrared spectroscopic device 1 of the present embodiment, it is possible to acquire an interferogram excluding influence of noise light, thereby suppressing a decrease in accuracy caused by the noise light and enabling highly accurate spectroscopic analysis.

Next, the quantum interference and the interferogram in the infrared spectroscopic device 1 will be described in more detail from the viewpoint of quantum optics. In order to facilitate the understanding of the quantum interference and the interferogram, the quantum interference and the interferogram in the reference configuration will be described first in the following description.

[Reference Configuration]

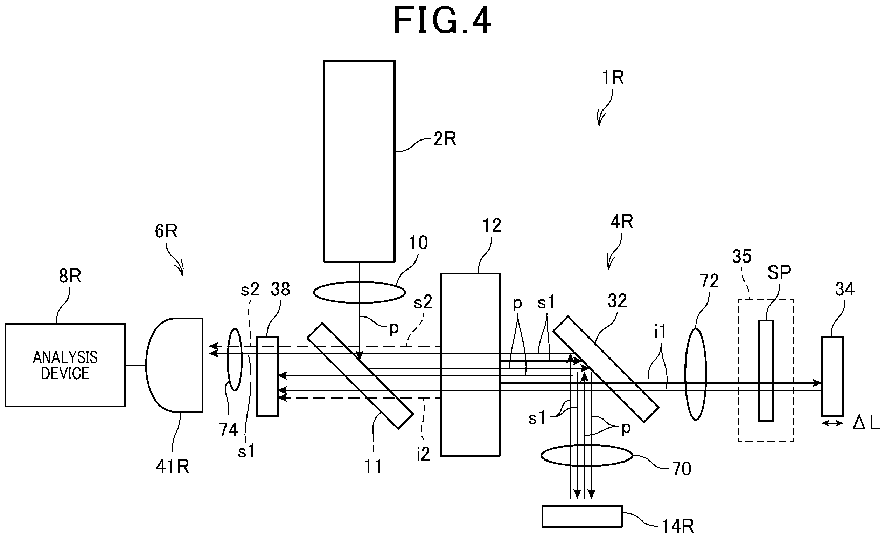

Fig. 4 is a diagram schematically illustrating a configuration as a reference configuration 1R for the infrared spectroscopic device 1 of the present embodiment. In Fig. 4, the same members as those illustrated in Fig. 1 are denoted by the same reference signs, and the description thereof will be omitted.

As illustrated in Fig. 4, the reference configuration 1R includes a light source 2R, a quantum optical system 4R, a detection unit 6R, and an analysis device 8R, which corresponds to the light source 2, the quantum optical system 4, the detection unit 6, and the analysis device 8 of the infrared spectroscopic device 1, respectively. However, there are the following main differences between the infrared spectroscopic device 1 and the reference configuration 1R.

That is, a first difference is that, while the quantum optical system 4 of the infrared spectroscopic device 1 outputs the signal lights s1 and s2 separately, the quantum optical system 4R of the reference configuration 1R outputs signal lights s1 and s2 in an overlapping state. That is, while the fixed mirror 14 in the quantum optical system 4 of the infrared spectroscopic device 1 transmits the signal light s1, a fixed mirror 14R in the quantum optical system 4R of the reference configuration 1R reflects signal light s1 rather than transmitting the signal light s1.

A second difference is that, while the detection unit 6 of the infrared spectroscopic device 1 synthesizes the two signal lights s1 and s2 using the beam splitter 40, the quantum optical system 4R of the reference configuration 1R outputs the two signal lights s1 and s2 synthesized by overlapping the two signal lights s1 and s2 through the same optical path.

A third difference is that, while the detection unit 6 of the infrared spectroscopic device 1 outputs the synthesized light split into two signal lights s1' and s2' by the beam splitter 40, and the analysis device 8 obtains the interferogram from the difference between the light intensities P1s and P2s of the signal lights s1' and s2', the reference configuration 1R detects a light intensity Ps of light in which the two signal lights s1 and s2 are synthesized using one detector 41R, and the analysis device 8R obtains an interferogram based on the light intensity Ps.

The quantum interference and the interferogram in the reference configuration 1R are described as follows using quantum optics. Note that meanings of symbols, variables, operators, and the like in the following description are as shown in Table 1.

[Table 1]

| | |
|---|---|
| $\hat{a}_{s1}(\omega)$ | Annihilation operator of signal light s1 at angular frequency $\omega$ |
| $\hat{a}_{s2}(\omega)$ | Annihilation operator of signal light s2 at angular frequency $\omega$ |
| $\hat{a}_{i1}(\omega)$ | Annihilation operator of idler light i1 at angular frequency $\omega$ |
| $\hat{a}_{i2}(\omega)$ | Annihilation operator of idler light i2 at angular frequency $\omega$ |
| $\omega_p$ | Angular frequency of pump light |
| $t_{0p}$ | Time from passage of pump light through nonlinear crystal on forward path until pump light passes through nonlinear crystal again on backward path |
| $t_{0s}$ | Time from passage of signal light s1 through nonlinear crystal on forward path until signal light s1 passes through nonlinear crystal again on backward path |
| $t_{0i}$ | Time from passage of idler light i1 through nonlinear crystal on forward path until idler light i1 passes through nonlinear crystal again on backward path |
| $F(\omega_s, \omega_i)$ | Two-photon amplitude in which first argument is angular frequency of signal light and second argument is angular frequency of idler light |
| $\eta$ | Conversion factor of nonlinear optical crystal, of which square of absolute value indicates conversion efficiency. |
| $\tau(\omega)$ | Complex transmittance of sample for light at angular frequency $\omega$ |
| $r(\omega)$ | Complex reflectance of sample for light at angular frequency $\omega$ |
| $\hat{a}_{0'}(\omega), \hat{a}_{0''}(\omega)$ | Dummy annihilation operator for light at angular frequency $\omega$ (see Non Patent Literature 1) |
| $I_0$ | Power of signal light generated when pump light passes through nonlinear crystal only one way |
| $\lvert vac\rangle$ | Vacuum-state vector |

First, in classical optics, light is described by an electric field that is described by complex numbers. On the other hand, in quantum optics, a state of a system is described by a state vector that is a source of a complex Hilbert space and a physical quantity (an operator on the Hilbert space) acting on the state vector.

In the reference configuration 1R, assuming that the idler light i1 and the idler light i2 can be distinguished from each other and the signal light s1 and the signal light s2 can be distinguished from each other for the sake of convenience in explaining processes of deriving formulas, the state vector of the quantum optical system 4R is expressed by the following Formula (1).

[Mathematical formula 1]

$$
\begin{aligned}
\lvert \psi\rangle = \lvert vac\rangle &+ \eta \iint d\,\omega_s d\omega_i F(\omega_s, \omega_i)\hat{a}_{s1}^{\dagger}(\omega_s)\hat{a}_{i1}^{\dagger}(\omega_i)\lvert vac\rangle \\
&+ \eta e^{i\omega_p t_{0p}} \iint d\,\omega_s d\omega_i F(\omega_s, \omega_i)\hat{a}_{s2}^{\dagger}(\omega_s)\hat{a}_{i2}^{\dagger}(\omega_i)\lvert vac\rangle \cdots (1)
\end{aligned}
$$

However, in the quantum optical system 4R of the reference configuration 1R, actually, since the signal light s1

and the signal light s2 cannot be distinguished from each other because they coaxially overlap each other and have the same polarization and angular frequency, and annihilation operators of the signal light s1 and the signal light s2 have a relationship shown in the following Formula (2). Similarly, the idler light i1 and the idler light i2 cannot be distinguished from each other. However, since the idler light i1 passes through the sample SP twice, the annihilation operators of the idler light i1 and the idler light i2 have a relationship of the following Formula (3) using a so-called beam splitter model (For Formula (3), see, for example, Non Patent Literature 1).

[Mathematical formula 2]

$$\hat{a}_{s2}(\omega_s) = e^{i\omega_s t_{0s}} \hat{a}_{s1}(\omega_s) \cdots (2)$$

[Mathematical formula 3]

$$\hat{a}_{i2}(\omega_i) = e^{i\omega_i t_{0i}} \{\tau^2(\omega_i)\hat{a}_{i1}(\omega_i) + r(\omega_i)\tau(\omega_i)\hat{a}_{0\prime}(\omega_i) + r\hat{a}_{0\prime\prime}(\omega_i)\} \cdots (3)$$

Therefore, in a state where the signal light s1 and the signal light s2 are combined according to Formula (2) and the idler light i1 and the idler light i2 are combined according to Formula (3), a state vector of the quantum optical system 4R is expressed by the following Formula (4) from Formulas (1) to (3).

[Mathematical formula 4]

$$|\psi\rangle = |vac\rangle + \eta \iint d\,\omega_s d\omega_i F(\omega_s, \omega_i)\{e^{i\omega_s t_{0s}} + e^{i\omega_p t_{0p} - i\omega_i t_{0i}}\tau^{*2}(\omega_i)\}\hat{a}^{\dagger}_{s2}(\omega_s)\hat{a}^{\dagger}_{i1}(\omega_i)|vac\rangle$$
$$+ \eta \iint d\,\omega_s d\omega_i F(\omega_s, \omega_i)e^{i\omega_p t_{0p} - i\omega_i t_{0i}}r^{*}(\omega_i)\tau^{*}(\omega_i)\hat{a}^{\dagger}_{s2}(\omega_s)\hat{a}^{\dagger}_{0\prime}(\omega_i)|vac\rangle$$
$$+ \eta \iint d\,\omega_s d\omega_i F(\omega_s, \omega_i)e^{i\omega_p t_{0p} - i\omega_i t_{0i}}r^{*}(\omega_i)\hat{a}^{\dagger}_{s2}(\omega_s)\hat{a}^{\dagger}_{0\prime\prime}(\omega_i)|vac\rangle \cdots (4)$$

Next, in the reference configuration 1R, an electric field of a positive frequency at time t measured by the detector 41R is expressed by the following Formula (5).

[Mathematical formula 5]

$$\hat{E}^{(+)}_s(t) \propto \int d\omega \hat{a}_{s2}(\omega) e^{-i\omega t} \cdots (5)$$

Then, when the electric field of the positive frequency of Formula (5) is applied to Formula (4) indicating the state vector of the quantum optical system 4R, the following Formula (6) is obtained.

[Mathematical formula 6]

$$\hat{E}^{(+)}_s(t)|\psi\rangle \propto \iint d\,\omega_s d\omega_i F(\omega_s, \omega_i)\{e^{i\omega_s(t_{0s} - t)} + e^{i\omega_p t_{0p} - i\omega_i t_{0i} - i\omega_s t}\tau^{*2}(\omega_i)\}\hat{a}^{\dagger}_{i1}(\omega_i)|vac\rangle$$
$$+ \iint d\,\omega_s d\omega_i F(\omega_s, \omega_i)e^{i\omega_p t_{0p} - i\omega_i t_{0i} - i\omega_s t}r^{*}(\omega_i)\tau^{*}(\omega_i)\hat{a}^{\dagger}_{0\prime}(\omega_i)|vac\rangle$$
$$+ \iint d\,\omega_s d\omega_i F(\omega_s, \omega_i)e^{i\omega_p t_{0p} - i\omega_i t_{0i} - i\omega_s t}r^{*}(\omega_i)\hat{a}^{\dagger}_{0\prime\prime}(\omega_i)|vac\rangle \cdots (6)$$

Next, a square of a norm of Formula (6) is obtained by taking the inner product of the state vector of Formula (6) and the conjugate vector (Formula (6A)) of the state vector. Using the obtained formula, a time average of light intensities Ps of signal lights measured by the detector 41R of the reference configuration 1R is expressed by the following Formula (7). Meanwhile, "t" to the lower right of "< >" in Formula (7) denotes a time average, and "c.c." denotes a complex conjugate of a preceding term. The range of the time average is set to at least exceed the response time of the infrared detector.

[Mathematical formula 6A]

$$\langle\psi|\hat{E}^{(-)}_s(t) \qquad \cdots \quad (6A)$$

[Mathematical formula 7]

$$P_s \propto \left\langle \psi \left| \hat{E}_s^{(-)}(t) \hat{E}_s^{(+)}(t) \right| \psi \right\rangle_t$$

$$\propto \iint d\omega_s d\omega_i |F(\omega_s, \omega_i)|^2 \left| e^{i\omega_s t_{0s}} + e^{i\omega_p t_{0p} - i\omega_i t_{0i}} \tau^{*2}(\omega_i) \right|^2$$

$$+ \iint d\omega_s d\omega_i |F(\omega_s, \omega_i)|^2 |r^*(\omega_i)|^2 |\tau^*(\omega_i)|^2 + \iint d\omega_s d\omega_i |F(\omega_s, \omega_i)|^2 |r^*(\omega_i)|^2$$

$$= 2 + \iint d\omega_s d\omega_i |F(\omega_s, \omega_i)|^2 \tau^{*2}(\omega_i) e^{i\omega_p t_{0p} - i\omega_i t_{0i} - i\omega_s t_{0s}} + \text{c. c.} \cdots (7)$$

Here, when the wavelength center of the signal light s denoted by $\omega_{0s}$ and the wavelength center of the idler light i is denoted by $\omega_{0i}$, $\omega_s + \omega_i = \omega_p$ = constant is established in the spontaneous parametric down-conversion, and thus, $\omega_s$ and $\omega_i$ in Formula (7) are expressed as $\omega_s = \omega_{0s} - \Omega$ and $\omega_i = \omega_{0i} + \Omega$, respectively, using one angular frequency $\Omega$. Using this, $F(\omega_s, \omega_i) = F(\Omega)$, and Formula (7) is expressed as the following Formula (8).
[Mathematical formula 8]

$$P_s \propto 2 + e^{i\omega_p t_{0p} - i\omega_{0i} t_{0i} - i\omega_{0s} t_{0s}} \int d\Omega |F(\Omega)|^2 \tau^{*2}(\omega_{0i} + \Omega) e^{-i\Omega(t_{0i} - t_{0s})} + \text{c. c.} \cdots (8)$$

Then, in the reference configuration 1R, in a case where the origin of the movement amount $\Delta L$ is set such that $t_{0i} = t_{0s}$ when the movement amount $\Delta L$ of the movable mirror 34R is "0", Formula (8) is expressed as the following Formula (9).
[Mathematical formula 9]

$$P_s \propto 2 + e^{i\omega_p t_{0p} - i\omega_{0i} t_{0i} - i\omega_{0s} t_{0s}} \int d\Omega |F(\Omega)|^2 \tau^{*2}(\omega_{0i} + \Omega) e^{-2i\Omega \frac{\Delta L}{c}} + \text{c. c.} \cdots (9)$$

Here, in order to facilitate comparison with the infrared spectroscopic device 1 of the present embodiment, a light intensity in a case where there is no loss of the signal light s and the quantum efficiency of the detector 41R is "1" is obtained. The constant "2" on the right side in Formula (9) corresponds to average power. When the power of the signal light s generated when the pump light p passes through the nonlinear crystal 12 only one way is denoted by $I_0$, it is appropriate to set the average power to $2I_0$. Therefore, in this case, Formula (9) is expressed as the following Formula (10), and an interferogram corresponding to Formula (10) is obtained in the reference configuration 1R.
[Mathematical formula 10]

$$\bar{\bar{P}}_s = 2I_0 + e^{i\omega_p t_{0p} - i\omega_{0i} t_{0i} - i\omega_{0s} t_{0s}} I_0 \int d\Omega |F(\Omega)|^2 \tau^{*2}(\omega_{0i} + \Omega) e^{-2i\Omega \frac{\Delta L}{c}} + \text{c. c.} \cdots (10)$$

Next, the quantum interference and the interferogram in the infrared spectroscopic device 1 are described as follows using quantum optics. Note that meanings of symbols, variables, operators, and the like in the following description are as shown in Table 2.

[Table 2]

| | |
|---|---|
| $\hat{a}'_{s1}(\omega)$ | Annihilation operator of signal light s1' at angular frequency $\omega$ |
| $\hat{a}'_{s2}(\omega)$ | Annihilation operator of signal light s2' at angular frequency $\omega$ |
| $t_{1s}$ | Time from emission of signal light s1 from nonlinear crystal until signal light s1 reaches beam splitter |
| $t_{2s}$ | Time from emission of signal light s2 from nonlinear crystal until signal light s2 reaches beam splitter |

The signal light s1 and the signal light s2 in the infrared spectroscopic device 1 pass through completely different routes and are clearly distinguished from each other, differently from those in the reference configuration 1R. Thus, the above-mentioned Formula (2) is not established, and the annihilation operators of the signal light s1 and the signal light s2 are independent from each other. On the other hand, the idler light i1 and the idler light i2 in the infrared spectroscopic device 1 overlap each other, similarly to those in the reference configuration 1R. Thus, the above-mentioned Formula (3) is established. Therefore, a state vector of the quantum optical system 4 of the infrared spectroscopic device 1 is expressed by Formula (11) using Formulas (1) and (3).

[Mathematical formula 11]

$$
\begin{aligned}
|\psi'\rangle =& |vac\rangle + \eta \iint d\,\omega_s d\omega_i F(\omega_s, \omega_i)\hat{a}_{s1}^\dagger(\omega_s)\hat{a}_{i1}^\dagger(\omega_i)|vac\rangle \\
&+ \eta \iint d\,\omega_s d\omega_i F(\omega_s, \omega_i)e^{i\omega_p t_{0p}-i\omega_i t_{0i}}\tau^{*2}(\omega_i)\hat{a}_{s2}^\dagger(\omega_s)\hat{a}_{i1}^\dagger(\omega_i)|vac\rangle \\
&+ \eta \iint d\,\omega_s d\omega_i F(\omega_s, \omega_i)e^{i\omega_p t_{0p}-i\omega_i t_{0i}}r^*(\omega_i)\tau^*(\omega_i)\hat{a}_{s2}^\dagger(\omega_s)\hat{a}_{0'}^\dagger(\omega_i)|vac\rangle \\
&+ \eta \iint d\,\omega_s d\omega_i F(\omega_s, \omega_i)e^{i\omega_p t_{0p}-i\omega_i t_{0i}}r^*(\omega_i)\hat{a}_{s2}^\dagger(\omega_s)\hat{a}_{0''}^\dagger(\omega_i)|vac\rangle \cdots (11)
\end{aligned}
$$

Furthermore, in the detection unit 6 of the infrared spectroscopic device 1, conversion of light in the beam splitter 40, in which the ratio of transmittance to reflectance is 1:1, is expressed by the following Formula (12) using the annihilation operators of the signal light s1 and the signal light s2 input to the incidence ports 40A1 and 40A2 different from each other and the annihilation operators of the signal light s1' and the signal light s2' output from the emission ports 40B1 and 40B2 different from each other. In Formula (12), a 2-row and 2-column matrix portion indicates the conversion action of the beam splitter 40, and each component of the matrix portion is determined on the basis of the transmittance and the reflectance of the beam splitter 40. Note that, depending on how the phase components are treated, there are several ways to express the matrix related to the beam splitter 40, and here, Formula (12) is adopted. For example, there is also a display method in which a matrix related to the beam splitter 40 is represented by Formula (12 A), but a final result is only addition of a phase constant and is essentially the same as the display method of Formula (12).

[Mathematical formula 12]

$$
\begin{pmatrix} \hat{a}'_{s1}(\omega) \\ \hat{a}'_{s2}(\omega) \end{pmatrix} = \begin{pmatrix} \dfrac{1}{\sqrt{2}} & \dfrac{-1}{\sqrt{2}} \\ \dfrac{1}{\sqrt{2}} & \dfrac{1}{\sqrt{2}} \end{pmatrix} \begin{pmatrix} \hat{a}_{s1}(\omega)e^{i\omega t_{1s}} \\ \hat{a}_{s2}(\omega)e^{i\omega t_{2s}} \end{pmatrix} = \begin{pmatrix} \dfrac{\hat{a}_{s1}(\omega)e^{i\omega t_{1s}} - \hat{a}_{s2}(\omega)e^{i\omega t_{2s}}}{\sqrt{2}} \\ \dfrac{\hat{a}_{s1}(\omega)e^{i\omega t_{1s}} + \hat{a}_{s2}(\omega)e^{i\omega t_{2s}}}{\sqrt{2}} \end{pmatrix} \cdots (12)
$$

[Mathematical formula 12A]

$$
\begin{pmatrix} \dfrac{1}{\sqrt{2}} & \dfrac{i}{\sqrt{2}} \\ \dfrac{i}{\sqrt{2}} & \dfrac{1}{\sqrt{2}} \end{pmatrix} \qquad \cdots \quad (12A)
$$

In the infrared spectroscopic device 1, an electric field of a positive frequency at time t of the signal light s1' measured by the first detector 41 is expressed by the following formula (13), and similarly, an electric field of a positive frequency at time t of the signal light s2' measured by the second detector 42 is expressed by the following formula (14).

[Mathematical formula 13]

$$
\hat{E}_{1s}^{(+)}(t) \propto \int d\omega \hat{a}'_{s1}(\omega)\, e^{-i\omega t} = \frac{1}{\sqrt{2}} \int d\omega\, \hat{a}_{s1}(\omega)e^{-i\omega(t-t_{1s})} - \frac{1}{\sqrt{2}} \int d\omega\, \hat{a}_{s2}(\omega)e^{-i\omega(t-t_{2s})} \cdots (13)
$$

[Mathematical formula 14]

$$
\hat{E}_{2s}^{(+)}(t) \propto \int d\omega \hat{a}'_{s2}(\omega)\, e^{-i\omega t} = \frac{1}{\sqrt{2}} \int d\omega\, \hat{a}_{s1}(\omega)e^{-i\omega(t-t_{1s})} + \frac{1}{\sqrt{2}} \int d\omega\, \hat{a}_{s2}(\omega)e^{-i\omega(t-t_{2s})} \cdots (14)
$$

Then, when Formula (13) is applied to Formula (11) indicating the state vector of the quantum optical system 4, the following Formula (15) is obtained, and similarly, when Formula (14) is applied to Formula (11), Formula (16) is obtained.

[Mathematical formula 15]

$$\hat{E}_{1s}^{(+)}(t)|\psi'\rangle \propto \frac{1}{\sqrt{2}} \iint d\omega_s d\omega_i F(\omega_s, \omega_i)\{e^{-i\omega_s(t-t_{1s})} - e^{i\omega_p t_{0p} - i\omega_i t_{0i} - i\omega_s(t-t_{2s})}\tau^{*2}(\omega_i)\}\hat{a}_{i1}^{\dagger}(\omega_i)|vac\rangle$$

$$-\frac{1}{\sqrt{2}} \iint d\omega_s d\omega_i F(\omega_s, \omega_i)e^{i\omega_p t_{0p} - i\omega_i t_{0i} - i\omega_s(t-t_{2s})}r^*(\omega_i)\tau^*(\omega_i)\hat{a}_{0'}^{\dagger}(\omega_i)|vac\rangle$$

$$-\frac{i}{\sqrt{2}} \iint d\omega_s d\omega_i F(\omega_s, \omega_i)e^{i\omega_p t_{0p} - i\omega_i t_{0i} - i\omega_s(t-t_{2s})}r^*(\omega_i)\hat{a}_{0''}^{\dagger}(\omega_i)|vac\rangle \cdots (15)$$

[Mathematical formula 16]

$$\hat{E}_{2s}^{(+)}(t)|\psi'\rangle \propto \frac{1}{\sqrt{2}} \iint d\omega_s d\omega_i F(\omega_s, \omega_i)\{e^{-i\omega_s(t-t_{1s})} + e^{i\omega_p t_{0p} - i\omega_i t_{0i} - i\omega_s(t-t_{2s})}\tau^{*2}(\omega_i)\}\hat{a}_{i1}^{\dagger}(\omega_i)|vac\rangle$$

$$+\frac{1}{\sqrt{2}} \iint d\omega_s d\omega_i F(\omega_s, \omega_i)e^{i\omega_p t_{0p} - i\omega_i t_{0i} - i\omega_s(t-t_{2s})}r^*(\omega_i)\tau^*(\omega_i)\hat{a}_{0'}^{\dagger}(\omega_i)|vac\rangle$$

$$+\frac{1}{\sqrt{2}} \iint d\omega_s d\omega_i F(\omega_s, \omega_i)e^{i\omega_p t_{0p} - i\omega_i t_{0i} - i\omega_s(t-t_{2s})}r^*(\omega_i)\hat{a}_{0''}^{\dagger}(\omega_i)|vac\rangle \cdots (16)$$

Next, a square of a norm of Formula (15) is obtained by taking the inner product of the state vector of Formula (15) and the conjugate vector (Formula (16A)) of the state vector. Using the obtained formula, a time average of light intensities P1s of signal lights s1' measured by the first detector 41 of the infrared spectroscopic device 1 is expressed by the following formula (17). Meanwhile, "t" to the lower right of "<>" in Formula (17) denotes a time average, and "c.c." denotes a complex conjugate of a preceding term. The range of the time average is set to at least exceed the response time of the infrared detector.

Similarly, a square of a norm of Formula (16) is obtained by taking the inner product of the state vector of Formula (16) and its conjugate vector (Formula (17 A)). Using the obtained formula, a time average of the light intensities P2s of signal lights s2' measured by the second detector 42 of the infrared spectroscopic device 1 is expressed by the following Formula (18). Meanwhile, "t" to the lower right of "< >" in Formula (18) denotes a time average, and "c.c." denotes a complex conjugate of a preceding term. The range of the time average is set to at least exceed the response time of the infrared detector.

[Mathematical formula 16A]

$$\langle\psi'|\hat{E}_{1s}^{(-)}(t) \qquad \cdots (16A)$$

[Mathematical formula 17]

$$P_{1s} \propto \left\langle \psi'\left|\hat{E}_{1s}^{(-)}(t)\hat{E}_{1s}^{(+)}(t)\right|\psi'\right\rangle_t$$

$$\propto \frac{1}{2} \iint d\omega_s d\omega_i |F(\omega_s, \omega_i)|^2 \left|e^{i\omega_s t_{1s}} - e^{i\omega_p t_{0p} - i\omega_i t_{0i} + i\omega_s t_{2s}}\tau^{*2}(\omega_i)\right|^2$$

$$+\frac{1}{2} \iint d\omega_s d\omega_i |F(\omega_s, \omega_i)|^2 |r^*(\omega_i)|^2 |\tau^*(\omega_i)|^2 + \frac{1}{2} \iint d\omega_s d\omega_i |F(\omega_s, \omega_i)|^2 |r^*(\omega_i)|^2$$

$$= 1 - \frac{1}{2} \iint d\omega_s d\omega_i |F(\Omega)|^2 \tau^{*2}(\omega_i)e^{i\omega_p t_{0p} - i\omega_i t_{0i} - i\omega_s(t_{1s}-t_{2s})} + c.c. \cdots (17)$$

[Mathematical formula 17A]

$$\langle\psi'|\hat{E}_{2s}^{(-)}(t) \qquad \cdots (17A)$$

[Mathematical formula 18]

$$P_{2s} \propto \left\langle \psi' \left| \hat{E}_{2s}^{(-)}(t) \hat{E}_{2s}^{(+)}(t) \right| \psi' \right\rangle_t$$

$$\propto \frac{1}{2} \iint d\,\omega_s d\omega_i |F(\omega_s, \omega_i)|^2 \left| e^{i\omega_s t_{1s}} + e^{i\omega_p t_{0p} - i\omega_i t_{0i} + i\omega_s t_{2s}} \tau^{*2}(\omega_i) \right|^2$$

$$+ \frac{1}{2} \iint d\,\omega_s d\omega_i |F(\omega_s, \omega_i)|^2 |r^*(\omega_i)|^2 |\tau^*(\omega_i)|^2 + \frac{1}{2} \iint d\,\omega_s d\omega_i |F(\omega_s, \omega_i)|^2 |r^*(\omega_i)|^2$$

$$= 1 + \frac{1}{2} \iint d\,\omega_s d\omega_i |F(\Omega)|^2 \tau^{*2}(\omega_i) e^{i\omega_p t_{0p} - i\omega_i t_{0i} - i\omega_s(t_{1s} - t_{2s})} + c.\,c. \cdots (18)$$

In Formulas (17) and (18), the constant "1" on the right side is considered to indicate average power in each of the emission ports 40B1 and 40B2. In the beam splitter 40, the power is split evenly in a ratio of 1:1, so that the average powers at the emission port 40B1 and 40B2 are equal. Therefore, it is considered that the ratios on the right side and the left side are equal in both Formulas (17) and (18), and a difference between the light intensity P1s and the light intensity P2s can be obtained as shown in Formula (19) by directly calculating a difference between Formulas (17) and (18).

[Mathematical formula 19]

$$P_{2s} - P_{1s} \propto \iint d\,\omega_s d\omega_i |F(\Omega)|^2 \tau^{*2}(\omega_i) e^{i\omega_p t_{0p} - i\omega_i t_{0i} - i\omega_s(t_{1s} - t_{2s})} + c.\,c. \cdots (19)$$

Similarly to Formulas (8), Formulas (19) is expressed as the following Formulas (20) using one angular frequency $\Omega$.

[Mathematical formula 20]

$$P_{2s} - P_{1s} \propto e^{i\omega_p t_{0p} - i\omega_{0i} t_{0i} - i\omega_{0s} t_{0s}} \int d\Omega |F(\Omega)|^2 \tau^{*2}(\omega_{0i} + \Omega) e^{-i\Omega(t_{0i} - t_{1s} + t_{2s})} + c.\,c. \cdots (20)$$

Furthermore, in the infrared spectroscopic device 1, in a case where the origin of the movement amount $\Delta L$ is set such that $t_{0i} = t_{1s} - t_{2s}$ when the movement amount $\Delta L$ of the movable mirror 34 is "0", Formula (20) is expressed as the following Formula (21).

[Mathematical formula 21]

$$P_{2s} - P_{1s} \propto e^{i\omega_p t_{0p} - i\omega_{0i} t_{0i} - i\omega_{0s} t_{0s}} \int d\Omega |F(\Omega)|^2 \tau^{*2}(\omega_{0i} + \Omega) e^{-2i\Omega \frac{\Delta L}{c}} + c.\,c. \cdots (21)$$

Here, when a light intensity in a case where there is no loss of the signal lights s1, s2, s1', and s2' and the quantum efficiency of the first detector 41 and the quantum efficiency of the second detector 42 are "1" is obtained, Formulas (17) and (18) are expressed as the following Formulas (22) and (23), respectively.

[Mathematical formula 22]

$$\bar{\bar{P}}_{1s} = I_0 - \frac{I_0}{2} \iint d\,\omega_s d\omega_i |F(\Omega)|^2 \tau^{*2}(\omega_i) e^{i\omega_p t_{0p} - i\omega_i t_{0i} - i\omega_s(t_{1s} - t_{2s})} + c.\,c. \cdots (22)$$

[Mathematical formula 23]

$$\bar{\bar{P}}_{2s} = I_0 + \frac{I_0}{2} \iint d\,\omega_s d\omega_i |F(\Omega)|^2 \tau^{*2}(\omega_i) e^{i\omega_p t_{0p} - i\omega_i t_{0i} - i\omega_s(t_{1s} - t_{2s})} + c.\,c. \cdots (23)$$

Then, Formula (21) is expressed as the following Formulas (24) and (25) by using Formulas (22) and (23). Then, in the analysis device 8 of the infrared spectroscopic device 1, interferograms corresponding to Formulas (24) and (25) are obtained.

[Mathematical formula 24]

$$\bar{\bar{P}}_{2s} - \bar{\bar{P}}_{1s} = e^{i\omega_p t_{0p} - i\omega_{0i} t_{0i} - i\omega_{0s} t_{0s}} I_0 \int d\Omega |F(\Omega)|^2 \tau^{*2}(\omega_{0i} + \Omega) e^{-i\Omega(t_{0i} - t_{1s} + t_{2s})} + c.\,c. \cdots (24)$$

[Mathematical formula 25]

$$\bar{\bar{P}}_{2s} - \bar{\bar{P}}_{1s} = e^{i\omega_p t_{0p} - i\omega_{0i} t_{0i} - i\omega_{0s} t_{0s}} I_0 \int d\Omega |F(\Omega)|^2 \tau^{*2}(\omega_{0i} + \Omega) e^{-2i\Omega \frac{\Delta L}{c}} + c.c. \cdots (25)$$

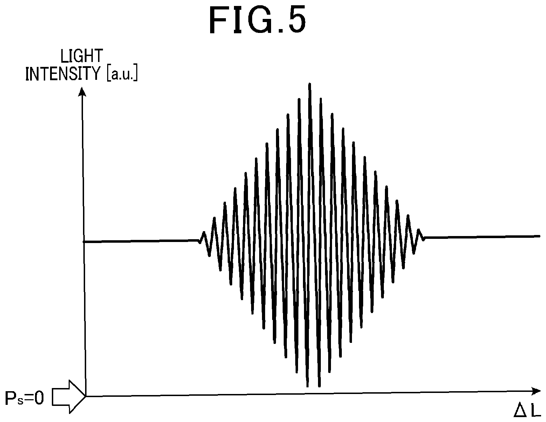

Comparing Formula (10) for the reference configuration 1R with Formulas (25) for the infrared spectroscopic device 1, while Formulas (10) includes a term "$2I_0$" corresponding to the power of the signal lights s1 and s2, Formulas (25) does not include such a term. In the quantum optical system 4R of the reference configuration 1R, noise light (stray light, fluorescence, or the like), which is not an entangled photon pair generated in the nonlinear crystal 12 but is light generated by mixture, reaches the infrared detector 41R and is added to an interferogram. Therefore, as illustrated in Fig. 5, the interferogram having a waveform in which the center of the amplitude of power is away from 0 is obtained. On the other hand, in the infrared spectroscopic device 1, noise light (stray light, fluorescence, or the like), which is not an entangled photon pair generated in the nonlinear crystal 12 but is light generated by mixture in the quantum optical system 4, is not related to quantum interference, and thus is evenly distributed to the two emission ports 40B1 and 40B2. As a result, in an interferogram obtained by taking a difference, such noise is removed as illustrated in Fig. 2.

Meanwhile, as mentioned in the description of Formula (12), the signal light s1' and the signal light s2' emitted from the beam splitter 40 are in phases inverted from each other. This will be explained below.

That is, when a light intensity of the signal light s1 is measured on the incident side of the beam splitter 40, since it is clear that the source of the signal light s1 is the first entangled photon pair generation process, quantum interference does not occur, and the light intensity does not change even if the movable mirror 34 is moved. Also, when a light intensity of the signal light s2 is measured on the incident side of the beam splitter 40, the light intensity does not change depending on the movable mirror 34 for the same reason.

In addition, the sum of light intensities of two signal lights s1 and s2 incident on the beam splitter 40 is equal to the sum of light intensities of two signal lights s1' and s2' emitted from the beam splitter 40. In addition, since the light intensities of the signal lights s1 and s2 do not vary even if the movable mirror 34 is moved as described above, the sum of light intensities of signal lights s1' and s2' also does not change even if the movable mirror 34 is moved.

Then, when a light intensity of the signal light s1' is measured on the emission side of the beam splitter 40, quantum interference occurs because the source of the signal light s1' is unknown, and an interferogram is observed when the movable mirror 34 is moved. The same applies to the case where a light intensity of the signal light s2' is measured on the emission side of the beam splitter 40.

However, since the sum of the light intensities of the signal lights s1' and s2' does not change even if the movable mirror 34 is moved as described above, the two interferograms observed on the emission side of the beam splitter 40 are in opposite phases.

The above-described embodiment merely shows one aspect of the present invention, and any modification and application can be made without departing from the gist of the present invention.

For example, in the above-described embodiment, it has been described an example that an interferogram is acquired from a difference (P2s-P1s) between light intensities P1s and P2s of signal lights s1' and s2'. However, the interferogram may be acquired from a difference ($\alpha$P2s-$\beta$P1s) between values of the light intensities P1s and P2s of which at least one is obtained by multiplying a constant ($\alpha$ and $\beta$ are constants either of which may be 1). As a result, for example, even in a case where the ratio of reflectance to transmittance of the beam splitter deviates from 1:1 and noise cannot be canceled by a simple difference, the noise can be canceled by adjusting $\alpha$ and $\beta$. In addition, there is a possibility that the offset of the interferogram obtained by such an operation may not be 0 as in Fig. 2, but cancellation of noise may be prioritized.

In addition, modifications of the embodiment of the present invention will be described below.

(First Modification)

In the infrared spectroscopic device 1 described above, the quantum optical system 4 has an optical path length change function for changing the length of the optical path from the second dichroic mirror 32 to the movable mirror 34, and the optical path length for the idler light i is changed by the optical path length change function. However, the quantum optical system 4 may change the optical path length for the signal light s1 instead of the optical path length for the idler light i.

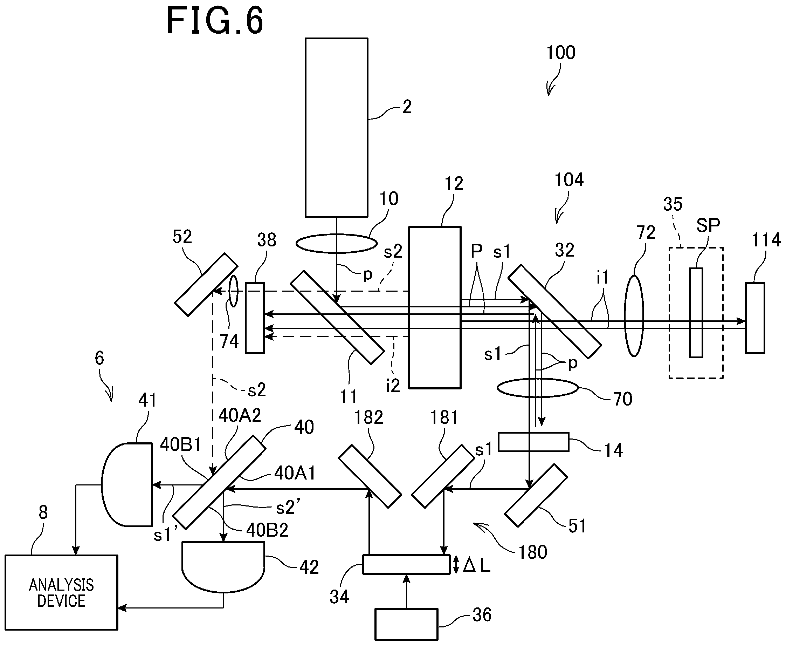

Fig. 6 is a diagram schematically illustrating a configuration of an infrared spectroscopic device 100 according to the present modification. In Fig. 6, the members illustrated in Fig. 1 are denoted by the same reference signs, and the description thereof will be omitted.

In the infrared spectroscopic device 100 according to the present modification, a quantum optical system 104 uses a fixed mirror 114 as a reflecting mirror that reflects the idler light i1, whereby the optical path length for the idler light i1 is fixed. In addition, the quantum optical system 104 includes an optical path length changing mechanism 180 that changes the optical path length of signal light s1 at a stage before the detection unit 6. The optical path length changing mechanism 180 includes the movable mirror 34 that is moved at a constant speed by the actuator 36, a first reflecting mirror 181 that reflects the signal light s1 transmitted through the fixed mirror 14 toward the movable mirror 34, and a second reflecting mirror 182 that reflects the signal light s1 reflected by the movable mirror 34 toward the detection unit 6, and the optical path length for the signal light s1 (the optical path length between the second dichroic mirror 32 and the movable mirror 34) is changed by moving the movable mirror 34.

Since the signal light s1 is in an entangled state with the idler light i1 passing through the sample SP and contains the information on the action with the sample SP as described above, an interferogram is obtained by causing the signal light s2, not containing information about the sample SP, and the signal light s1 to interfere with each other by synthesis while changing the optical path length for the signal light s1.

According to the present modification, it is not necessary to extend the length of the optical path of the idler light i on which the sample SP is placed, and the optical path length for the idler light i can be fixed at the minimum required length. This makes it possible to limit the dimensions of the sample chamber that contains the sample SP to the minimum required length. Therefore, even when it is necessary to put air into the sample chamber for analysis, the amount of air can be limited, suppressing a decrease in analysis accuracy caused by the influence of absorption due to moisture in the air.

(Second Modification)

In the infrared spectroscopic device 1 described above, the quantum optical system 4 includes the fixed mirror 14 that reflects the pump light p emitted from the nonlinear crystal 12 and causes the nonlinear crystal 12 to be incident on the nonlinear crystal 12 again in order to realize a quantum interference function for generating quantum interference between multiple entangled photon pair generation processes, and the pump light p travels back and forth through the nonlinear crystal 12 so that the multiple entangled photon pair generation processes are performed in the same nonlinear crystal 12. However, the quantum optical system 4 may cause entangled photon pair generation processes in different nonlinear crystals 12.

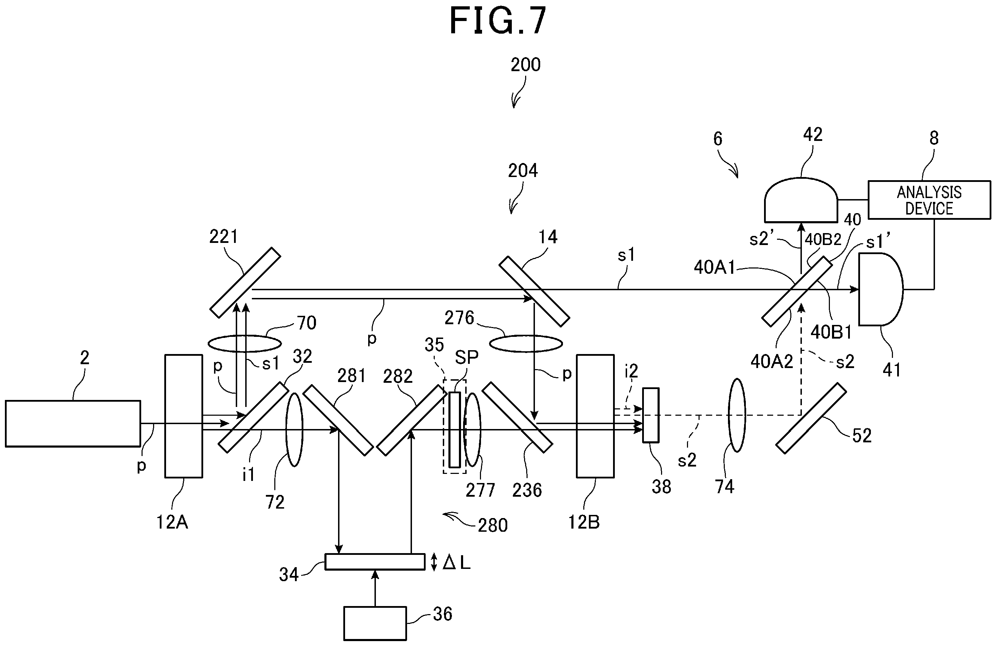

Fig. 7 is a diagram schematically illustrating a configuration of an infrared spectroscopic device 200 according to the present modification. In Fig. 7, the members illustrated in Fig. 1 are denoted by the same reference signs, and the description thereof will be omitted.

A quantum optical system 204 included in the infrared spectroscopic device 200 includes a first nonlinear crystal 12A and a second nonlinear crystal 12B that can be considered to be identical to each other, instead of one nonlinear crystal 12, and is configured such that pump light p emitted from the light source 2 sequentially passes through the first nonlinear crystal 12A and the second nonlinear crystal 12B, thereby causing a first entangled photon pair generation process and a second entangled photon pair generation process. That is, the second modification includes the first nonlinear crystal 12A and the second nonlinear crystal 12B, and the quantum optical system 204 emits first signal light s1 along an optical path of the pump light p incident on the first nonlinear crystal 12A, and emits second signal light s2 along an optical path of the pump light p incident on the second nonlinear crystal 12B.

In addition, in this configuration, an optical path length changing mechanism 280 that changes the optical path length for the idler light i1 is arranged between the first nonlinear crystal 12A and the second nonlinear crystal 12B. The optical path length changing mechanism 280 has substantially the same configuration as the optical path length changing mechanism 180 included in the infrared spectroscopic device 100, and includes a movable mirror 34, a first reflecting mirror 281 that reflects idler light i1 emitted from the first nonlinear crystal 12A toward the movable mirror 34, and a second reflecting mirror 282 that reflects idler light i1 reflected by the movable mirror 34 toward the sample SP, and the movable mirror 34 is moved at a constant speed by the actuator 36 to change the optical path length for the idler light i1.

On the other hand, the pump light p and the signal light s1 emitted from the first nonlinear crystal 12A are reflected by a reflecting mirror 221 toward the fixed mirror 14, and the signal light s1 is output to the detection unit 6 through the fixed mirror 14. The pump light p is reflected by the fixed mirror 14, is incident on the second nonlinear crystal 12B via a condensing lens 276 and a third dichroic mirror 236.

The idler light i1 having passed through the sample SP passes through a condensing lens 277 and the third dichroic mirror 236, and is incident on the second nonlinear crystal 12B in an overlapping state with the pump light p. As a result, quantum interference occurs between the second entangled photon pair generation process and the first entangled photon pair generation process in the second nonlinear crystal 12B. In this case, since the idler light i1 passes through the sample SP only once, the formula corresponding to Formula (3) is the following Formula (25A), and the formulas corresponding to Formulas (10) and (25) are obtained by replacing "$\tau^{*2}$" with "$\tau^*$" in each of the formulas.

[Mathematical formula 25A]

$$\hat{a}_{i2}(\omega_i) = e^{i\omega_i t_{0i}}\{\tau(\omega_i)\hat{a}_{i1}(\omega_i) + r(\omega_i)\hat{a}_{0\prime}(\omega_i)\} \qquad \cdots (25\mathrm{A})$$

In the infrared spectroscopic device 200 according to the present modification, in a case where the absorption by the sample SP is large, the amplitude of the obtained interferogram increases, making it possible to measure a larger absorbance. For example, in a case where a sample SP having a power transmittance of $10^{-4}$ is a measurement target, the amplitude of the obtained interferogram is 100 times (=($\sqrt{10^{-4}}$)/($10^{-4}$)).

Furthermore, the infrared spectroscopic device 200 according to the present modification improves the degree of freedom in the layout of the quantum optical system 204 because it is not necessary to return the pump light p to the same nonlinear crystal 12 (Fig. 1).

(Third Modification)

In the infrared spectroscopic device 200 according to the second modification, the quantum optical system 204 is configured to change the optical path length for the idler light i1, but may be configured to change the optical path length for the signal light s1 as in the first modification.

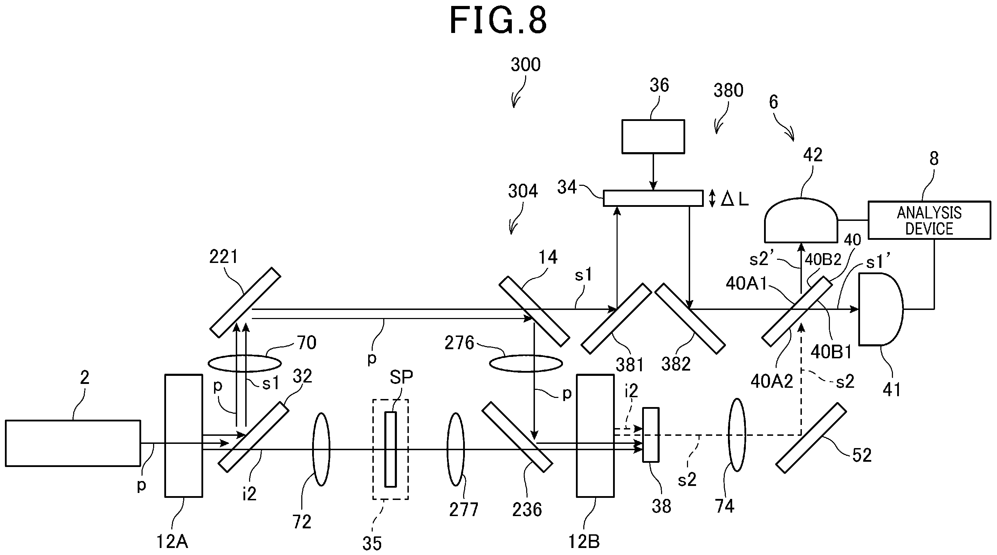

Fig. 8 is a diagram schematically illustrating a configuration of an infrared spectroscopic device 300 according to the present modification. In Fig. 8, the members illustrated in Fig. 7 are denoted by the same reference signs, and the description thereof will be omitted.

A quantum optical system 304 of the infrared spectroscopic device 300 includes an optical path length changing mechanism 380 that changes the optical path length for the signal light s1 instead of the optical path length changing mechanism 280 that changes the optical path length for the idler light i1. The optical path length changing mechanism 380 has substantially the same configuration as the optical path length changing mechanism 180 included in the infrared spectroscopic device 100, and includes a movable mirror 34, a first reflecting mirror 381 that reflects signal light s1 emitted from the nonlinear crystal 12A and passing through the fixed mirror 14 toward the movable mirror 34, and a second reflecting mirror 382 that reflects signal light s1 reflected by the movable mirror 34 toward the detection unit 6, and the movable mirror 34 is moved at a constant speed by the actuator 36 to change the optical path length for the signal light s1.

(Fourth Modification)

In the infrared spectroscopic device 100 according to the first modification and the infrared spectroscopic device 300 according to the third modification, the optical path length for the signal light s1 is changed. When the optical path length for the signal light s1 is changed as described above, it is preferable that the optical path length for the pump light p is also changed by the same amount as the optical path length for the signal light s1.

More specifically, an interferogram based on a difference between the light intensities P1s and P2s of the two signal lights s1' and s2' output from the beam splitter 40 has a waveform corresponding to Formula (21). Formula (21) is a product of an integral operation part expressed by the following Formula (26) and a variation factor part expressed by the following Formula (27).

[Mathematical formula 26]

$$\int d\Omega |F(\Omega)|^2 \tau^{*2}(\omega_{0i} + \Omega) e^{-2i\Omega\frac{\Delta L}{c}} \cdots (26)$$

[Mathematical formula 27]

$$\omega_p t_{0p} - \omega_{0i} t_{0i} - \omega_{0s} t_{0s} \cdots (27)$$

Then, the integral operation part is a factor of an envelope that gradually changes, and the variation factor part is a factor that vigorously oscillates in a phase represented by Formula (27).

In the infrared spectroscopic device 1 according to the embodiment and the infrared spectroscopic device 200 according to the second modification, when the optical path length for the idler light i1 is moved by $\Delta L$, $t_{0i}$ moves by $2\Delta L/c$, and the phase change is expressed by the following Formula (28).

[Mathematical formula 28]

$$-\frac{2\omega_{0i}\Delta L}{c} = -2\pi\frac{\Delta L}{\lambda_{0i}/2} \cdots (28)$$

Here, since $\lambda_{0i}$ denotes the center wavelength of the idler light i, the interferogram oscillates at a cycle that is half the idler center wavelength $\lambda_{0i}$, and the transmittance of the sample SP with respect to the idler wavelength can be obtained by processing the interferogram.

On the other hand, in the infrared spectroscopic device 100 according to the first modification and the infrared spectroscopic device 300 according to the third modification, the optical path length for the signal light s1 is changed. In a manner similar to that in a case where the optical path length for the idler light i1 is changed, the interferogram in this case oscillates at half the center wavelength of the signal light s1. Therefore, when this interferogram is processed, a relationship between the "signal wavelength" and the "transmittance with respect to the idler wavelength corresponding to the signal wavelength" is directly obtained. In this case, when the wavelength of the pump light p can be regarded as a constant value, a relationship between the idler wavelength and the transmittance corresponding to the idler wavelength is derived therefrom. However, when the wavelength of the pump light p cannot be regarded as a constant value due to the drift of the wavelength of the pump light p or the like, it is necessary to separately measure the wavelength of the pump light p.

Therefore, in a case where both the optical path lengths of the signal light s1 and the pump light p are changed by the same amount, the phase is expressed by the following Formula (29).

[Mathematical formula 29]

$$\omega_p \frac{2\Delta L}{c} - \omega_{0s} \frac{2\Delta L}{c} = \left(\omega_p - \omega_{0s}\right)\frac{2\Delta L}{c} = \omega_{0i}\frac{2\Delta L}{c} = 2\pi\frac{\Delta L}{\lambda_{0i}/2} \quad \cdots (29)$$

In this case, when the movable mirror 34 is moved by the movement amount $\Delta L$, the interferogram oscillates at a cycle that is 1/2 of the wavelength of the idler light i1, similarly to those in the infrared spectroscopic device 1 according to the embodiment and the infrared spectroscopic device 300 according to the third modification. Therefore, it can be seen that even when the wavelength of the pump light p varies, the spectral characteristics (transmittance and the like) of the sample SP with respect to the wavelength of the idler light can be directly obtained based on the interferogram.

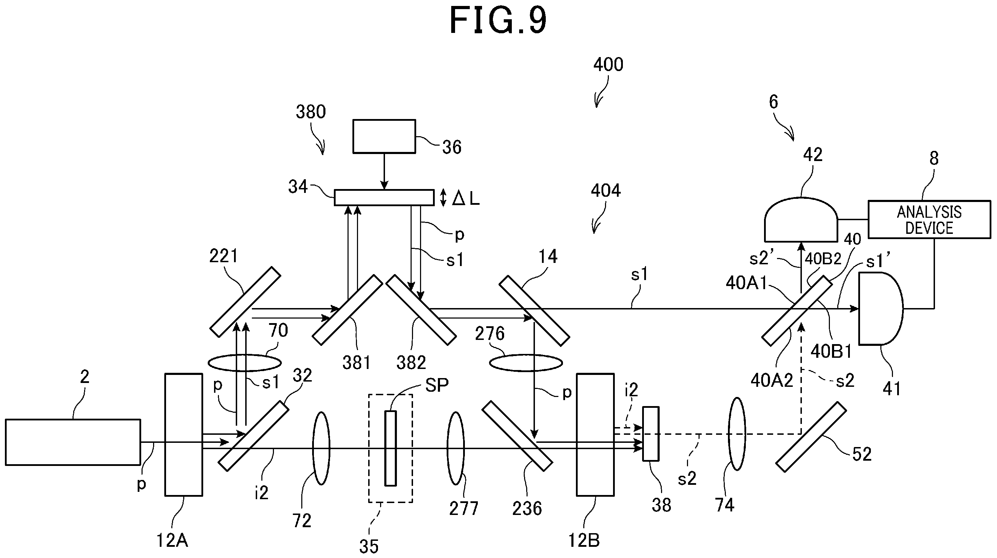

Fig. 9 is a diagram schematically illustrating a configuration of an infrared spectroscopic device 400 according to the present modification. In Fig. 9, the members illustrated in Fig. 8 are denoted by the same reference signs, and the description thereof will be omitted.

As illustrated in Fig. 9, in a quantum optical system 404 of the infrared spectroscopic device 400, the above-described optical path length changing mechanism 380 (Fig. 8) that changes the optical path length for the signal light s1 is arranged between the nonlinear crystal 12A and the fixed mirror 14, so that the path lengths of the signal light s1 and the pump light p are changed by the same amount.

It is to be understood by those skilled in the art that the above-described exemplary embodiment and modifications thereof are specific examples of the following aspects.

A spectroscopic device according to one aspect includes: a light source that emits pump light; a quantum optical system on which the pump light is incident; a detection unit that detects a light intensity of light output from the quantum optical system; and an analysis device that acquires an interferogram based on the light intensity, in which the quantum optical system includes: a nonlinear optical element that generates a photon pair of idler light and signal light by causing a first entangled photon pair generation process by incidence of the pump light from the light source; a movable mirror that changes an optical path length for the idler light or the signal light; a fixed mirror that reflects the pump light emitted from the nonlinear optical element and causes the pump light to be incident on the nonlinear optical element again to causes a second entangled photon pair generation process in which quantum interference occurs with the first entangled photon pair generation process in the nonlinear optical element; a sample placement tool that places a sample on an optical path of the idler light generated in any of the first entangled photon pair generation process and the second entangled photon pair generation process; a first output member that outputs signal light generated in the first entangled photon pair generation process; and a second output member that outputs signal light generated in the second entangled photon pair generation process, the detection unit includes: a beam splitter on which the signal light output from each of the first output member and the second output member of the quantum optical system is incident; and two detectors that detect light intensities of the two lights emitted from the beam splitter, and the analysis device acquires the interferogram according to a difference between the light intensities detected by the two detectors.

The spectroscopic device according to one aspect described above is capable of obtaining an interferogram excluding influence of noise light.

A spectroscopic device according to one aspect includes: a light source that emits pump light; a quantum optical system on which the pump light is incident; a detection unit that detects a light intensity of light output from the quantum optical system; and an analysis device that acquires an interferogram based on the light intensity, in which the quantum optical system includes: a first nonlinear optical element that generates a photon pair of idler light and signal light by causing a first entangled photon pair generation process by incidence of the pump light from the light source; a movable mirror that changes an optical path length for the idler light or the signal light; a fixed mirror that reflects the pump light emitted from the first nonlinear optical element; a second nonlinear optical element that causes a second entangled photon pair generation process in which quantum interference occurs with the first entangled photon pair generation process by incidence of the pump light reflected by the fixed mirror; a sample placement tool that places a sample on an optical path of the idler light generated in any of the first entangled photon pair generation process and the second entangled photon pair generation process; a first output member that outputs signal light generated in the first entangled photon pair generation process; and a second output member that outputs signal light generated in the second entangled photon pair generation process, the detection unit includes: a beam splitter on which the signal light output from each of the first output member and the second output member of the quantum optical system is incident; and two detectors that detect light intensities of the two lights emitted from the beam splitter, and the analysis device acquires the interferogram according to a difference between the light intensities detected by the two detectors.

The spectroscopic device according to one aspect described above is capable of obtaining an interferogram excluding influence of noise light. In addition, it is not necessary to return the pump light to the same nonlinear optical element, improving the degree of freedom in the layout of the quantum optical system.

In the spectroscopic device according to each of the above-described aspects, the quantum optical system may cause the signal light and the pump light to be incident on the movable mirror, and change the optical path lengths for the signal light and the pump light by the same amount by moving the movable mirror.

According to this spectroscopic device, even when the wavelength of the pump light varies, the spectral characteristics of the sample with respect to the wavelength of the idler light can be directly obtained based on the interferogram.

[Second Embodiment]

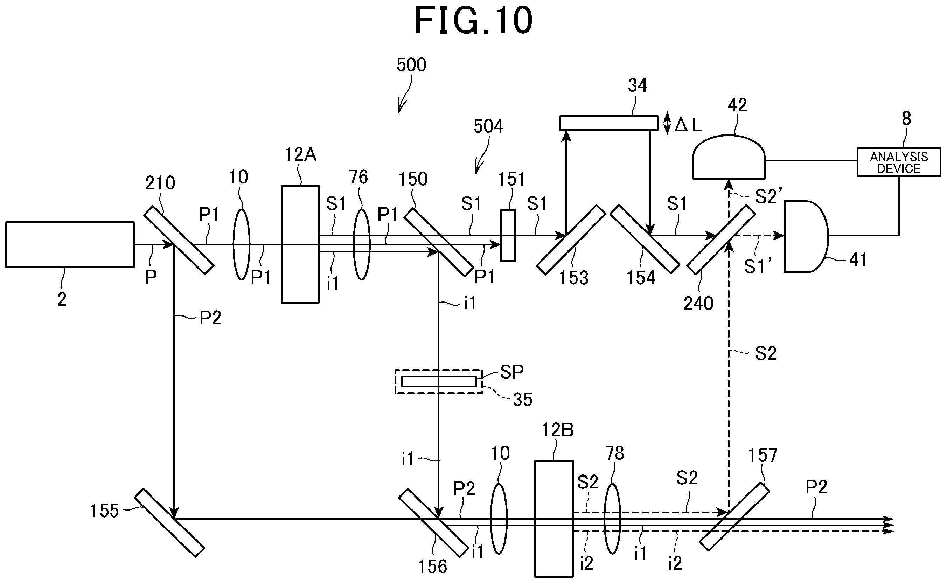

Fig. 10 is a diagram schematically illustrating a configuration of an infrared spectroscopic device 500 according to a second embodiment. Reference sign 504 denotes a quantum optical system. In Fig. 10, the same members as those illustrated in Fig. 1 are denoted by the same reference signs, and the description thereof will be omitted. Furthermore, in Fig. 10, optical paths overlapping each other are depicted separately for convenience of explanation.

The quantum optical system 504 of the second embodiment includes a first nonlinear crystal 12A and a second nonlinear crystal 12B that can be considered to be identical to each other, instead of one nonlinear crystal 12 as in the second to fourth modifications illustrated in Figs. 7 to 9. Here, the first nonlinear crystal 12A and the second nonlinear crystal 12B have equivalent characteristics.

In the second embodiment, as a configuration different from those of the second to fourth modifications, a pump light splitting beam splitter (pump light splitting member) 210 in which a ratio of transmittance to reflectance is 1:1 is provided at a stage before the first nonlinear crystal 12A. By the pump light splitting beam splitter 210, the pump light p is split into two pump lights p1 and p2, one pump light p1 being incident on the first nonlinear crystal 12A to cause a first entangled photon pair generation process, and the other pump light p2 being incident on the second nonlinear crystal 12B to cause a second entangled photon pair generation process. In addition, in the second embodiment, a movable mirror (a signal light reflecting mirror for adjusting a signal light path length) 134 constituting an optical path length changing mechanism that changes the optical path length for the signal light s1 is provided.

The quantum optical system 504 will be described in detail. The one pump light p1 is incident on the first nonlinear crystal 12A via the condensing lens 10, and a very small part of the pump light p1 is converted into first signal light s1 and first idler light i1 by spontaneous parametric down-conversion.

The pump light p1, and the first signal light s1 and the first idler light i1 obtained by converting the very small part of the pump light p1 pass through a collimator lens 76, and are incident on a first idler light reflecting mirror 150. The pump light p1 and the first signal light s1 are transmitted through the first idler light reflecting mirror 150, and the first idler light i1 is reflected by the first idler light reflecting mirror 150.

The pump light p1 and the first signal light s1 transmitted through the first idler light reflecting mirror 150 are incident on a band pass filter (BPS) 151, and the first signal light s1 separated by the band pass filter 151 is reflected by a first signal light reflecting mirror 153, a movable mirror (a signal light reflecting mirror for adjusting a signal light path length) 34, and a second signal light reflecting mirror 154 in this order, and is introduced into a first incidence port of a signal light mixing beam splitter 240 in which the ratio of transmittance to reflectance is 1:1. The first detector 41 is connected to the first incidence port, and first signal light s1' is measured by the first detector 41.

In addition, the first idler light i1 reflected by the first idler light reflecting mirror 150 is incident on the sample placement tool 35.

The other pump light p2 split by the pump light splitting beam splitter 210 is reflected by a pump reflecting mirror 155 and transmitted through a second idler light reflecting mirror 156. The above-described first idler light i1 transmitted through the sample placement tool 35 is reflected by the second idler light reflecting mirror 156, and the other pump light p2 and the first idler light i1 are incident on the second nonlinear crystal 12B via the condensing lens 10.

In the second nonlinear crystal 12B, a very small part of the pump light p2 is converted into second signal light s2 and second idler light i2 by spontaneous parametric down-conversion. Since the conversion efficiency is small, the power of the pump light p2 may be equal before and after incidence.

The second signal light s2, the pump light p2, the first idler light i1, and the second idler light i2 emitted from the second nonlinear crystal 12B are transmitted through a collimator lens 78 and incident on a signal light reflecting mirror 157. At this time, the optical path of the first idler light i1 and the optical path of the second idler light i2 strictly overlap each other.

The pump light p2, the first idler light i1, and the second idler light i2 are transmitted through the signal light reflecting mirror 157, and the second signal light s2 is reflected by the signal light reflecting mirror 157. The reflected second signal light s2 is introduced into a second incidence port of the signal light mixing beam splitter 240. The second detector 42 is connected to the second incidence port, and second signal light s2' is measured by the second detector 42.

The analysis device 8 records a difference between a signal light intensity of the first signal light s1' measured by the first detector 41 and a signal light intensity of the second signal light s2' measured by the second detector 42, acquires an interferogram by moving the movable mirror (the signal light reflecting mirror for adjusting the signal light path length) 34, and performs Fourier transform analysis on the interferogram to spectrally analyze the sample SP.

That is, according to the second embodiment, since the pump light splitting beam splitter 210 is provided at the stage before the nonlinear crystal 12, the two nonlinear crystals 12, i.e., the first and second nonlinear crystals 12 A and 12B, are provided, and the quantum optical system 504 is configured to cause one pump light p1 split by the beam splitter 210 to be incident on the first nonlinear crystal 12A and cause the other pump light p2 to be incident on the second nonlinear crystal 12B, the degree of freedom in designing the quantum optical system 504 increases.

According to the second embodiment, since the movable mirror 34 that changes the optical path length for the signal light s1 is provided, an interferogram can be acquired from the difference between the light intensity of the first signal light s1' measured by the first detector 41 and the light intensity of the second signal light s2' measured by the second detector 42 while the movable mirror 34 is moved at a constant speed, and the sample SP can be spectrally analyzed by Fourier transform analysis on the interferogram.

[Third Embodiment]

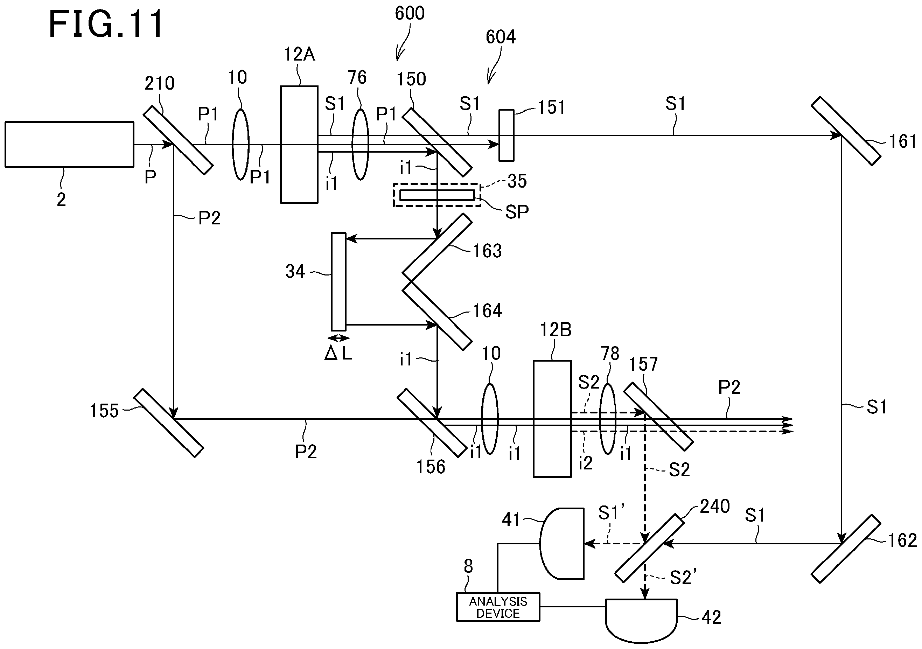

Fig. 11 is a diagram schematically illustrating a configuration of an infrared spectroscopic device 600 according to a third embodiment. Reference sign 604 denotes a quantum optical system. In Fig. 11, the members illustrated in Figs. 1 and 10 are denoted by the same reference signs, and the description thereof will be omitted. Furthermore, in Fig. 11, optical paths overlapping each other are depicted separately for convenience of explanation.

In the second embodiment, the signal light path length is adjusted using the movable mirror (the signal light reflecting mirror for adjusting the signal light path length) 34. In the third embodiment, however, the idler light path length is adjusted using the movable mirror (the idler light reflecting mirror for adjusting the idler light path length) 34 constituting an optical path length changing mechanism that changes the optical path length for the idler light i1.

One pump light p1 split by the pump light splitting beam splitter 210 is incident on the first nonlinear crystal 12A via the condensing lens 10, and a very small part of the pump light p1 is converted into first signal light s1 and first idler light i1.

The pump light p1, and the first signal light s1 and the first idler light i1 obtained by converting the very small part of the pump light p1 pass through a collimator lens 76, and are incident on a first idler light reflecting mirror 150. The pump light p1 and the first signal light s1 are transmitted through the first idler light reflecting mirror 150, and the first idler light i1 is reflected by the first idler light reflecting mirror 150.

The pump light p1 and the first signal light s1 transmitted through the first idler light reflecting mirror 150 are incident on the band pass filter 151, and the first signal light s1 separated by the band pass filter 151 is reflected by the first signal light reflecting mirror 161 and the second signal light reflecting mirror 162, and is introduced into the first incidence port of the signal light mixing beam splitter 240 in which the ratio of transmittance to reflectance is 1:1. The first detector 41 is connected to the first incidence port, and first signal light s1' is measured by the first detector 41.

In addition, the first idler light i1 reflected by the first idler light reflecting mirror 150 is incident on the sample placement tool 35.

The other pump light p2 split by the pump light splitting beam splitter 210 is reflected by a pump reflecting mirror 155 and transmitted through a second idler light reflecting mirror 156. The above-described first idler light i1 transmitted through the sample placement tool 35 is reflected by a third idler light reflecting mirror 163, a movable mirror (an idler light reflecting mirror for adjusting an idler light path length) 34, and a fourth idler light reflecting mirror 164 in this order, and is reflected by the second idler light reflecting mirror 156. The other pump light p2 and the first idler light i1 emitted from the second idler light reflecting mirror 156 are incident on the second nonlinear crystal 12B via the condensing lens 10.

In the second nonlinear crystal 12B, a very small part of the pump light p2 is converted into second signal light s2 and second idler light i2. Since the conversion efficiency is small, the power of the pump light p2 may be equal before and after incidence.

The second signal light s2, the pump light p2, the first idler light i1, and the second idler light i2 emitted from the second nonlinear crystal 12B are transmitted through the second collimator lens 78 and incident on the signal light reflecting mirror 157.

The pump light p2, the first idler light i1, and the second idler light i2 are transmitted through the signal light reflecting mirror 157, and the second signal light s2 is reflected by the signal light reflecting mirror 157. The reflected second signal light s2 is introduced into a second incidence port of the signal light mixing beam splitter 240. The second detector 42 is connected to the second incidence port, and second signal light s2' is measured by the second detector 42.

The analysis device 8 records a difference between a signal light intensity of the first signal light s1' measured by the first detector 41 and a signal light intensity of the second signal light s2' measured by the second detector 42, acquires an interferogram by moving the movable mirror (the idler light reflecting mirror for adjusting the idler light path length) 34, and performs Fourier transform analysis on the interferogram to spectrally analyze the sample SP.

According to the third embodiment, similarly to the second embodiment, since the movable mirror 34 that increases the degree of freedom in designing the quantum optical system 604 and changes the optical path length for the first idler light i1 is provided, an interferogram can be acquired from the difference between the light intensity of the first signal light s1' measured by the first detector 41 and the light intensity of the second signal light s2' measured by the second detector 42 while the movable mirror 34 is moved at a constant speed, and the sample SP can be spectrally analyzed by Fourier transform analysis on the interferogram.

(Other Modifications)

In each of the above-described embodiments and modifications, the combination of the wavelengths of the pump light p, the signal lights s1 and s2, and the idler lights i1 and i2 may be arbitrarily changed depending on the spectroscopic device to which the present invention is applied.

In each of the above-described embodiments and modifications, the configuration of each of the quantum optical systems 4, 104, 204, 304, and 404 can be replaced with another configuration that is equivalent in terms of classical optics or another configuration that is equivalent in terms of quantum optics.

In each of the above-described embodiments and modifications, unless otherwise specified, directions such as horizontal and vertical directions, various numerical values, shapes, and materials include a range (so-called equivalent range) in which the same functions and effects as those of the directions, numerical values, shapes, and materials are achieved.

[Aspects]

It is to be understood by those skilled in the art that the above-described exemplary embodiment and modifications thereof are specific examples of the following aspects.

(Clause 1) A spectroscopic device according to one aspect includes: a light source that emits pump light; a quantum optical system including one or more nonlinear optical elements on which the pump light is incident to generate a photon pair of idler light and signal light from the pump light in an entangled photon pair generation process, and a sample placement tool that places a sample on an optical path of the idler light; a detection unit that detects a light intensity of light output from the quantum optical system; and an analysis device that acquires an interferogram based on the light intensity, in which the quantum optical system is configured to emit first and second signal lights along different optical paths, the detection unit includes a beam splitter that receives the first and second signal lights from the quantum optical system, and detects a light intensity of each of two lights emitted from the beam splitter, and the analysis device acquires the interferogram from the two lights detected by the detection unit.

According to the spectroscopic device described in clause 1, an interferogram excluding influence of noise light is obtained.

(Clause 2) In the spectroscopic device according to clause 1, the number of nonlinear optical elements may be one, and the quantum optical system may emit the first and second signal lights along an optical path of the pump light that travels back and forth through the one nonlinear optical element.

According to the spectroscopic device described in clause 2, since the quantum optical system is configured using one nonlinear optical element, the configuration is simplified.

(Clause 3) In the spectroscopic device according to clause 1, the nonlinear optical elements may include first and second nonlinear optical elements, and the quantum optical system may emit the first signal light along an optical path of the pump light incident on the first nonlinear optical element, and emit the second signal light along the pump light incident on the second nonlinear optical element.

According to the spectroscopic device described in clause 3, it is not necessary to return the pump light to the same nonlinear optical element, improving the degree of freedom in the layout of the quantum optical system.

(Clause 4) The spectroscopic device according to clause 3 may further include a pump light splitting element at a stage before the nonlinear optical elements, in which one pump light split by the pump light splitting element may be incident on the first nonlinear optical element, and the other pump light may be incident on the second nonlinear optical element.

According to the spectroscopic device described in clause 4, the degree of freedom in the layout of the quantum optical system is improved.

(Clause 5) The spectroscopic device according to any one of clauses 1 to 4 may further include an optical path length changing mechanism that changes an optical path length for the signal light.

According to the spectroscopic device described in clause 5, the interferogram can be acquired from the two lights while the optical path length for the signal light beam is changed.

(Clause 6) The spectroscopic device according to any one of clauses 1 to 4 may further include an optical path length changing mechanism that changes an optical path length for the idler light.

According to the spectroscopic device described in clause 6, the interferogram can be acquired from the two lights detected by the detection unit while the optical path length for the idler light is changed.

(Clause 7) In the spectroscopic device according to clause 5 or 6, the optical path length changing mechanism may include a movable mirror, and the analysis device may acquire the interferogram from the two lights detected by the detection unit while the movable mirror is moved at a constant speed.

According to the spectroscopic device described in clause 7, the interferogram can be acquired from the two lights detected by the detection unit while the movable mirror is moved at a constant speed.

(Clause 8) In the spectroscopic device according to any one of clauses 1 to 7, the analysis device may acquire the interferogram from a difference between light intensities of the two lights detected by the detection unit.

According to the spectroscopic device described in clause 8, the interferogram can be easily and accurately acquired.

(Clause 9) In the spectroscopic device according to any one of clauses 1 to 7, the analysis device may acquire the interferogram from a difference between values of light intensities of the two lights detected by the detection unit of which at least one is obtained by multiplying a constant.

According to the spectroscopic device described in clause 9, the interferogram can be easily and accurately acquired.

Reference Signs List

1, 100, 200, 300, 400, 500, 600 Infrared spectroscopic device (spectroscopic device)
2, 2R Light source
4, 4R, 104, 204, 304, 404, 504, 604 Quantum optical system
6, 6R Detection unit
8, 8R Analysis device
12 Nonlinear crystal (nonlinear optical element)
12A First nonlinear crystal (first nonlinear optical element)
12B Second nonlinear crystal (second nonlinear optical element)
14, 14R Fixed mirror
32 Second dichroic mirror
34, 34R, Movable mirror
35 Sample placement tool
40, 240 Beam splitter
40A1, 40A2 Incidence port
40B1, 40B2 Emission port
41 First detector
42 Second detector
62 Interferogram acquisition unit
210 Pump light splitting beam splitter (pump light splitting member)
Ps, P1s, P2s Light intensity
SP Sample
i, i1, i2 Idler light
p, p1, p2 Pump light
s, s1, s2 Signal light

Claims

1. A spectroscopic device comprising:

   a light source that emits pump light;
   a quantum optical system including one or more nonlinear optical elements on which the pump light is incident to generate a photon pair of idler light and signal light from the pump light in an entangled photon pair generation process, and a sample placement tool that places a sample on an optical path of the idler light;
a detection unit that detects a light intensity of light output from the quantum optical system; and
an analysis device that acquires an interferogram based on the light intensity,
wherein the quantum optical system is configured to emit first and second signal lights along different optical paths,
the detection unit includes a beam splitter that receives the first and second signal lights from the quantum optical system, and detects a light intensity of each of two lights emitted from the beam splitter, and
the analysis device acquires the interferogram from the two lights detected by the detection unit.

2. The spectroscopic device according to claim 1, wherein

the number of nonlinear optical elements is one, and
the quantum optical system emits the first and second signal lights along an optical path of the pump light that travels back and forth through the one nonlinear optical element.

3. The spectroscopic device according to claim 1, wherein

the nonlinear optical elements include first and second nonlinear optical elements, and
the quantum optical system emits the first signal light along an optical path of the pump light incident on the first nonlinear optical element, and emit the second signal light along the pump light incident on the second nonlinear optical element.

4. The spectroscopic device according to claim 3 further comprising:

a pump light splitting element at a stage before the nonlinear optical elements,
wherein one pump light split by the pump light splitting element is incident on the first nonlinear optical element, and the other pump light is incident on the second nonlinear optical element.

5. The spectroscopic device according to claim 1, further comprising:
an optical path length changing mechanism that changes an optical path length for the signal light.

6. The spectroscopic device according to claim 1, further comprising:
an optical path length changing mechanism that changes an optical path length for the idler light.

7. The spectroscopic device according to claim 5 or 6, wherein

the optical path length changing mechanism includes a movable mirror, and
the analysis device acquires the interferogram from the two lights detected by the detection unit while the movable mirror is moved at a constant speed.

8. The spectroscopic device according to claim 1, wherein
the analysis device acquires the interferogram from a difference between light intensities of the two lights detected by the detection unit.

9. The spectroscopic device according to claim 1, wherein
the analysis device acquires the interferogram from a difference between values of light intensities of the two lights detected by the detection unit of which at least one is obtained by multiplying a constant.

# FIG.1

ANALYSIS DEVICE

MOVABLE MIRROR CONTROL UNIT

INTERFEROGRAM ACQUISITION UNIT

SPECTRUM CREATION UNIT

# FIG.2

FIG.3

# FIG.4

EP 4 492 019 A1

# FIG.5

LIGHT INTENSITY [a.u.] (vertical axis)

$P_s=0$

$\Delta L$ (horizontal axis)

FIG.6

EP 4 492 019 A1

# FIG.7

EP 4 492 019 A1

# FIG.8

FIG.9

# FIG.10

EP 4 492 019 A1

FIG.11

## INTERNATIONAL SEARCH REPORT

| | International application No. |
|---|---|
| | **PCT/JP2023/008375** |

**A. CLASSIFICATION OF SUBJECT MATTER**

***G01J 3/45***(2006.01)i; ***G01J 3/02***(2006.01)i
FI: G01J3/45; G01J3/02 Z

According to International Patent Classification (IPC) or to both national classification and IPC

**B. FIELDS SEARCHED**

Minimum documentation searched (classification system followed by classification symbols)

G01J3/00-4/04; G01J7/00-9/04; G01N21/00-21/01; G01N21/17-21/61

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

nature.com; Optica; IOP Science

**C. DOCUMENTS CONSIDERED TO BE RELEVANT**

| Category* | Citation of document, with indication, where appropriate, of the relevant passages | Relevant to claim No. |
|---|---|---|
| Y | LEMOS, Gabriela Barreto et al. Quantum imaging with undetected photons. Nature. 28 August 2014, vol. 512, pp. 409-412, METHODS, <doi: 10.1038/nature13586> in particular, p. 409, left column, line 1 to right column, line 29, fig. 1-2, METHODS | 1, 3-9 |
| A | | 2 |
| Y | WO 2001/088474 A1 (NIKON CORPORATION) 22 November 2001 (2001-11-22) p. 11, line 3 to p. 21, line 2, fig. 1-3 | 1, 3-9 |
| A | | 2 |
| Y | JP 63-167227 A (SHIMADZU CORP) 11 July 1988 (1988-07-11) p. 2, upper right column, line 1 to lower right column, line 20, fig. 1 | 1, 3-9 |
| A | | 2 |
| Y | MUKAI, Y. et al. Quantum Fourier-Transform Infrared Spectroscopy for Complex Transmittance Measurements. PHYSICAL REVIEW APPLIED. 08 March 2021, vol. 15, pp. 034019-1 to 034019-10, <DOI: 10.1103/PhysRevApplied.15.034019> in particular, abstract, I. INTRODUCTION | 1, 3-9 |
| A | | 2 |

☑ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **03 April 2023** | **18 April 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

<div align="center">

**INTERNATIONAL SEARCH REPORT**

</div>

| International application No. |
| --- |
| **PCT/JP2023/008375** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2021/117632 A1 (KYOTO UNIVERSITY) 17 June 2021 (2021-06-17)<br>    paragraphs [0007]-[0243], fig. 1-34 | 1-9 |
| A | US 2019/0086330 A1 (AGENCY FOR SCIENCE, TECHNOLOGY AND RESEARCH) 21 March 2019 (2019-03-21)<br>    paragraphs [0001]-[0124], fig. 1A-9B | 1-9 |
| A | JP 2004-85275 A (ADVANTEST CORP) 18 March 2004 (2004-03-18)<br>    paragraphs [0001]-[0121], fig. 1-9 | 1-9 |
| A | JP 2021-139890 A (FRAUNHOFER GES ZUR FOERDERUNG DER ANGEWANDTE FORSCHUNG E V) 16 September 2021 (2021-09-16)<br>    paragraphs [0001]-[0117], fig. 1-4 | 1-9 |

Form PCT/ISA/210 (second sheet) (January 2015)

**INTERNATIONAL SEARCH REPORT**
**Information on patent family members**

International application No.

**PCT/JP2023/008375**

| Patent document cited in search report | | | Publication date (day/month/year) | Patent family member(s) | | | Publication date (day/month/year) |
|---|---|---|---|---|---|---|---|
| WO | 2001/088474 | A1 | 22 November 2001 | JP | 2001-324308 | A | |
| JP | 63-167227 | A | 11 July 1988 | (Family: none) | | | |
| WO | 2021/117632 | A1 | 17 June 2021 | EP | 4075110 | A1 | |
| | | | | paragraphs [0007]-[0204], fig. 1-34 | | | |
| | | | | CN | 115135987 | A | |
| | | | | US | 2023/0020945 | A1 | |
| US | 2019/0086330 | A1 | 21 March 2019 | WO | 2017/160225 | A1 | |
| | | | | SG | 11201807118Y | A | |
| JP | 2004-85275 | A | 18 March 2004 | US | 2005/0078315 | A1 | |
| | | | | paragraphs [0001]-[0135], fig. 1-9 | | | |
| JP | 2021-139890 | A | 16 September 2021 | US | 2021/0270671 | A1 | |
| | | | | paragraphs [0001]-[0172], fig. 1-4 | | | |
| | | | | EP | 3872464 | A1 | |
| | | | | CN | 113324951 | A | |
| | | | | KR | 10-2021-0110518 | A | |
| | | | | CA | 3109688 | A1 | |
| | | | | SG | 10202101815P | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022035693 A

**Non-patent literature cited in the description**

- **ANNA PATEROVA** ; **HONGZHI YANG** ; **CHENGWU AN** ; **DMITRY KALASHNIKOV** ; **LEONID KRIVITSKY**. Measurement of infrared optical constants with visible photons. *New Journal of Physics*, April 2018, vol. 20, 043015
- **CHIARA LINDNER** ; **SEBASTIAN WOLF** ; **JENS KIESSLING** ; **DRANK KUHNEMANN**. Fourier transform infrared spectroscopy with visible light. *Optics Express*, 2020, vol. 28 (4), 4426-4432
- **Y. MUKAI** ; **M. ARAHATA** ; **T. TASHIMA** ; **R. OKAMOTO** ; **S. TAKEUCHI**. Quantum Fourier-Transform Infrared Spectroscopy for Complex Transmittance Measurements. *PHYSICAL REVIEW APPLIED*, March 2021, vol. 15 (3)
- **X. Y. ZOU** ; **L. J. WANG** ; **L. MANDEL**. Induced coherence and indistinguishability in optical interference. *Physical Review Letters*, 15 July 1991, vol. 67 (3), 318-321